# EUROPÄISCHE PATENTSCHRIFT

(11) **EP 4 559 996 B1**
(45) Veröffentlichungstag und Bekanntmachung des Hinweises auf die Patenterteilung: **29.04.2026**
(21) Anmeldenummer: 24213629.9
(22) Anmeldetag: 18.11.2024
(51) Int. Cl.: C10M 145/16, C04B 24/26, C10M 173/02

(54) **VERFAHREN ZUR HERSTELLUNG EINES TRENNMITTELS, EIN TRENNMITTEL UND VERWENDUNG DES TRENNMITTELS**
METHOD FOR PRODUCING A RELEASE AGENT, A RELEASE AGENT AND USE OF THE RELEASE AGENT
PROCÉDÉ DE FABRICATION D'UN AGENT DE DÉMOULAGE, AGENT DE DÉMOULAGE ET UTILISATION DE L'AGENT DE DÉMOULAGE

(30) Priorität: 22.11.2023 DE 102023132594
(43) Veröffentlichungstag der Anmeldung: 28.05.2025
(73) Patentinhaber: LEONHARD KURZ Stiftung & Co. KG, 90763 Fürth (DE)
(72) Erfinder: KNOOP, Mats Timothy, 90763 Fürth (DE); LUDWIG, Johannes, 90763 Fürth (DE)
(74) Vertreter: Louis Pöhlau Lohrentz

(56) Entgegenhaltungen:
- EP-B1- 2 970 542
- US-A1- 2020 032 074
- BRYCE E TATE: "The Decarboxylation of Itaconic Acid Polymers", DIE MAKROMOLEKULARE CHEMIE, 1 January 1967 (1967-01-01), pages 176 - 193, XP055550084, Retrieved from the Internet <URL:...>

## Beschreibung

Die Erfindung betrifft ein Verfahren zur Herstellung eines verbesserten Trennmittels, ein verbessertes Trennmittel und die Verwendung des Trennmittels.

Mineralische Baustoff-Mischungen, beispielsweise umfassend Beton, Mörtel und/oder Kalksandstein, werden beispielsweise bei der Herstellung von Gebäuden, bei der Errichtung von Tunneln, Brücken und Stützwände oder Gründungen oder von einzelnen Wänden, Decken, Stützen oder Ringankern, aber auch bei der Herstellung von Möbeln oder Kunstwerken verwendet.

Hierzu werden fließfähige oder plastische mineralische Baustoff-Mischungen in Formelemente, bevorzugt in Schalungen, eingebracht, die die Form eines daraus zu erhaltenen mineralischen Formkörpers vorgeben. Die Formelemente, bevorzugt Schalungen, werden nach einem Erstarren und/oder Erhärten typischerweise wieder entfernt.

Um eine zerstörungsfreie Trennung zwischen der Baustoff-Mischung und dem Formelement, bevorzugt der Schalung, zu erreichen, besteht die Möglichkeit auf zumindest einer Oberfläche des Formelements, bevorzugt auf zumindest einer Oberfläche der Schalung, ein Trennmittel anzuordnen, bevor diese mit einer fließfähigen oder plastischen Baustoff-Mischung, beispielsweise Frischbeton, kontaktiert wird. Durch das Trennmittel wird die Haftung zwischen Baustoff-Mischung und Formelement, bevorzugt Schalung, reduziert und Schaden an dem mineralischen Formkörper und der zumindest einen Oberfläche des Formelements, bevorzugt der zumindest einen Oberfläche der Schalung, vermieden.

Die zumindest eine Oberfläche des Formelements, bevorzugt der Schalung, kann saugend und/oder nicht-saugend ausgestaltet sein oder derart bereitgestellt werden. Die eine zumindest eine saugende Oberfläche des Formelements, bevorzugt der Schalung, kann auf Basis von biogenen Materialien, insbesondere Holz, bestehen. Weiter kann die zumindest eine Oberfläche, insbesondere saugende Oberfläche, rau, insbesondere säge-rau, gehobelt, geflammt und/oder gestrahlt derart bereitgestellt werden.

Alternativ kann die zumindest eine nicht-saugende Oberfläche des Formelements, bevorzugt der Schalung, auf Basis von Metall, insbesondere auf Basis von Stahl, vergütetem Holz, Kunststoff, insbesondere vergütetem Kunststoff, und/oder einer Strukturmatrize bestehen. Weiter kann die zumindest eine Oberfläche, insbesondere nicht-saugende Oberfläche, beispielsweise beheizt oder unbeheizt, und/oder mit einem Kunststoff und/oder Gummi befilmt und/oder beschichtet, oder Kombinationen davon, sein.

Aus dem Stand der Technik sind unterschiedliche Trennmittel bekannt. Diese können beispielsweise in Form von wasserunlöslichen Schalungsölen, Schalungspasten, Schalungswachsen, chemisch reagierenden Trennmitteln oder Trennmittelemulsionen vorliegen. Typischerweise enthalten Trennmittel zumindest eine Ölkomponente. Als Ölkomponente werden verschiedene Stoffklassen bzw. deren Mischungen verstanden. Diese Stoffklassen können beispielsweise Mineralöle, Wachse oder Fette und deren Derivate umfassen. Die Ölkomponente bildet hierbei meist den überwiegenden Anteil, bezogen auf das Gewicht des Trennmittels vor dem Anordnen auf dem Formelement, bevorzugt auf der Schalung.

Trennmittel, die in Form einer wässrigen Emulsion vorliegen, weisen typischerweise neben der Ölkomponente Emulgatoren, beispielsweise ionische Tenside und/oder nicht-ionische Tenside, auf, die die Ölkomponente in einem wässrigen Lösemittel in Form von Tröpfchen verteilen.

Die aus dem Stand der Technik bekannten Trennmittel haben verschiedene Nachteile. So weisen Mineralöle als Ölkomponente eine unzureichend biologische Abbaubarkeit auf. Zusätzlich sind Trennmittel, die zumindest eine Ölkomponente oder Emulgatoren aufweisen, typischerweise als wassergefährdend eingestuft und weisen damit eine geringe Umweltverträglichkeit auf.

Außerdem kann es durch Verseifung der Ölkomponente oder Emulgatoren durch alkalische Bestandteile der mineralischen Baustoff-Mischung zur unbeabsichtigten Ausfällung von Calciumseifen kommen. Dies wiederum führt zu Abbindestörungen und Gefügestörungen der mineralischen Baustoff-Mischung und resultiert in einem Fehlerbild, welches als Absanden bezeichnet wird. Absanden verursacht bei der Weiterbearbeitung der mineralischen Baustoff-Mischung Haftungsprobleme bspw. bei der Haftung von Anstrichen oder Putzen.

Weiter kann es bei Trennmitteln in Form wässriger Emulsionen durch eingesetzte Emulgatoren an einer Grenzfläche zu alkalischen mineralischen Baustoff-Mischungen zu Re-Emulgierung führen. Hierbei dringt das Trennmittel zumindest teilweise in die Oberfläche ein, die durch die mineralische Baustoff-Mischung gebildet wird. Das eingedrungene Trennmittel kann bei einer späteren Weiterverarbeitung zu Problemen bei der Haftung von Anstrichen oder Putzen führen.

Bei Trennmitteln, die zumindest eine Ölkomponente aufweisen, ist nach dem Entschalen ein größerer Reinigungsaufwand des mineralischen Formkörpers oder des Formelements, bevorzugt der Schalung, nötig. Dies, da diese mit Wasser nur schwierig rückstandslos entfernbar sind. Außerdem können Ölkomponenten des Trennmittels die Oberfläche des mineralischen Formkörpers verfärben und so das optische Erscheinungsbild unerwünscht beeinflussen bzw. verschlechtern.

EP 2 970 542 B1 beschreibt Itaconsäurecopolymere.

US 2020/032074 A1 beschreibt ein Formbeschichtungsmittel mit angepasstem Säurewert, das als Betonformtrennmittel fungiert.

Es ist nun eine Aufgabe der Erfindung, ein Verfahren zur Herstellung eines verbesserten Trennmittels, ein verbessertes Trennmittel und die Verwendung des verbesserten Trennmittels bereitzustellen, wobei das Trennmittel eine gute Umweltverträglichkeit und gute Trenneigenschaften aufweist.

Die Aufgabe wird gelöst durch ein Verfahren zur Herstellung eines Trennmittels, insbesondere nach einem der Ansprüche 1 bis 13, wobei das Verfahren zumindest die folgenden Schritte umfasst, wobei insbesondere die Schritte in der angegebenen Reihenfolge durchgeführt werden:
a) Bereitstellen einer reaktiven Mischung, umfassend eine carbonsäurehaltige Monomer-Komponente, die Itaconsäure und/oder Itaconsäurederivate umfasst, bevorzugt daraus besteht, wobei das Itaconsäurederivat der carbonsäurehaltigen Monomer-Komponente maximal an einer Carbonsäure derivatisiert ist, und wobei Derivate der Itaconsäure der carbonsäurehaltigen Monomer-Komponente das Anhydrid der Itaconsäure, der Methoxyester der Itaconsäure und/oder Ethoxyester der Itaconsäure sind,
b) Polymerisation der reaktiven Mischung zu einer Polymerlösung, wobei die Polymerlösung ein in einem Lösemittel zumindest teilweise gelöstes Polymer umfasst, das die carbonsäurehaltige Monomer-Komponente aufweist,
c) Erhalt eines Trennmittels umfassend die Polymerlösung, wobei aus dem Trennmittel, bevorzugt dem Polymer des Trennmittels, durch Decarboxylierung CO₂ freisetzbar ist, wobei das Trennmittel einen Indikator aufweist, wodurch das Trennmittel in einem trockenen Zustand einen anderen Farbeindruck aufweist im Vergleich zu einem feuchten Zustand

Weiter wird die Aufgabe gelöst durch ein Trennmittel, bevorzugt nach Anspruch 14, wobei das Trennmittel, insbesondere hergestellt nach dem Verfahren eines der vorstehenden Ansprüche 1 bis 13, ein in einem Lösemittel zumindest teilweise gelöstes Polymer aufweist, wobei das Polymer eine carbonsäurehaltige Monomer-Komponente aufweist, die Itaconsäure und/oder Itaconsäurederivate umfasst, wobei das Itaconsäurederivat der carbonsäurehaltigen Monomer-Komponente maximal an einer Carbonsäure derivatisiert ist, wobei Derivate der Itaconsäure der carbonsäurehaltigen Monomer-Komponente das Anhydrid der Itaconsäure, der Methoxyester der Itaconsäure und/oder Ethoxyester der Itaconsäure sind, wobei aus dem Trennmittel, bevorzugt dem Polymer des Trennmittels, durch Decarboxylierung CO₂ freisetzbar ist, und wobei das Trennmittel einen Indikator aufweist, wodurch das Trennmittel in einem trockenen Zustand einen anderen Farbeindruck aufweist im Vergleich zu einem feuchten Zustand.

Weiter wird die Aufgabe gelöst, insbesondere durch Anspruch 15, durch die Verwendung eines Trennmittels, insbesondere eines Trennmittels hergestellt nach einem der Ansprüche 1 bis 13, bei der Herstellung von mineralischen Formkörpern, dass das Trennmittel ein in einem Lösemittel zumindest teilweise gelöstes Polymer aufweist, wobei das Polymer eine carbonsäurehaltige Monomer-Komponente aufweist, die Itaconsäure und/oder Itaconsäurederivate umfasst, wobei das Itaconsäurederivat der carbonsäurehaltigen Monomer-Komponente maximal an einer Carbonsäure derivatisiert ist, wobei Derivate der Itaconsäure der carbonsäurehaltigen Monomer-Komponente das Anhydrid der Itaconsäure, der Methoxyester der Itaconsäure und/oder Ethoxyester der Itaconsäure sind, wobei das Trennmittel auf zumindest einer Oberfläche eines Formelements, bevorzugt auf zumindest einer Oberfläche einer Schalung, angeordnet wird und mit einer fließfähigen oder plastisch verformbaren mineralischen Baustoff-Mischung kontaktiert wird, wobei die mineralische Baustoff-Mischung Wasser und wenigstens ein mineralisches Bindemittel umfasst, und wobei aus dem Trennmittel, bevorzugt dem Polymer des Trennmittels, durch Decarboxylierung CO₂ freisetzbar ist.

Weiter ist es möglich, ein Verfahren zu der Herstellung von mineralischen Formkörpern bereitzustellen, wobei das Trennmittel hergestellt nach einem der Ansprüche 1 bis 13, auf zumindest einer Oberfläche eines Formelements, bevorzugt auf zumindest einer Oberfläche einer Schalung, angeordnet wird, welche mit einer mineralischen Baustoff-Mischung kontaktiert wird.

Durch das vorliegende Verfahren wird es ermöglicht, ein Trennmittel bereitzustellen, das ein zumindest teilweise gelöstes Polymer aufweist. Jedoch benötigt das erfindungsgemäße Trennmittel keine weiteren Emulgatoren oder Ölkomponenten. Durch den Verzicht auf diese Emulgatoren oder Ölkomponenten im erfindungsgemäßen Trennmittel werden die bereits oben genannten Nachteile, die Trennmittel aufweisen können, vermieden. Außerdem werden hierdurch etwaig anfallende Entsorgungskosten reduziert.

Ein weiterer Vorteil ist, dass das im erfindungsgemäßen Trennmittel zumindest teilweise gelöste Polymer im Gegensatz zu den im Stand der Technik bekannten Trennmitteln, auf Basis von biologischen Rohstoffen erzeugt werden kann. Mit anderen Worten kann die Menge der auf Erdöl basierenden Monomere reduziert werden. So kann beispielsweise die als Monomer herangezogene Itaconsäure biotechnologisch durch die Fermentation von Melasse erlangt oder aus Brenztraubensäure synthetisiert werden. Dies führt zu einem nachhaltigeren Produkt. Aufgrund der Verfügbarkeit der Rohstoffe kann ein Trennmittel umfassend das Polymer außerdem kostengünstig produziert werden.

Das vom Trennmittel umfasste Polymer weist zumindest Itaconsäure und/oder Itaconsäurederivate auf. Durch die Applikation des Trennmittels, beispielsweise durch ein Sprühverfahren, Pinselverfahren oder Rollenverfahren, bildet sich eine Schicht auf der zumindest einen Oberfläche des Formelements, bevorzugt auf der zumindest einen Oberfläche der Schalung. Durch eine bevorzugt ionisch katalysierte Decarboxylierung kann sich die molekulare Struktur des Polymers ändern. Alternativ oder zusätzlich kann die Decarboxylierung des Polymers thermisch initiiert werden. Unter Decarboxylierung wird die Abspaltung von Kohlendioxid (CO₂) verstanden. Insbesondere wird das CO₂ aus der vom Polymer umfassten Itaconsäure abgespalten, insbesondere unter Bildung eines Lactons und/oder der Abspaltung einer Carbonsäure.

In der folgenden Reaktionsgleichung (1) ist ein möglicher Reaktionsweg der Decarboxylierung von Polyitaconsäure (links) gezeigt und die resultierende Freisetzung von CO₂ (rechts). Durch die Reaktion weist das mögliche Produkt (rechts) einen Ringschluss innerhalb des Moleküls auf:

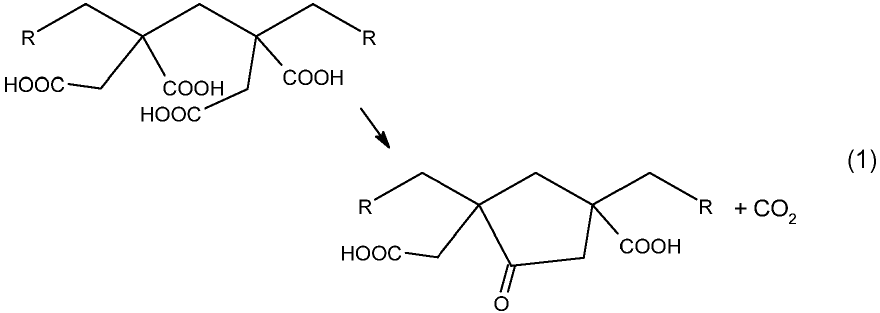

Durch das erfindungsgemäße Trennmittel werden Wechselwirkungen zwischen der mineralischen Baustoff-Mischung und dem Formelement, bevorzugt der Schalung, verhindert. Weiter hinterlässt das Trennmittel nach dem Entschalen keine oder nur geringe Rückstände auf der Oberfläche des Formelements, bevorzugt auf der Oberfläche der Schalung, oder dem mineralischen Formkörper. Etwaige Rückstände auf der Oberfläche lassen sich durch den Einsatz von lediglich Wasser, also ohne Einsatz von Tensiden, Lösemitteln oder chemischen Reinigern, und einem gewöhnlichen Lappen entfernen.

Weitere vorteilhafte Ausgestaltungen der Erfindung sind in den Unteransprüchen bezeichnet.

In Schritt a) wird die reaktive Mischung bereitgestellt, die eine carbonsäurehaltige Monomer-Komponente aufweist. Die carbonsäurehaltige Monomer-Komponente umfasst und/oder besteht aus Itaconsäure und/oder Itaconsäurederivaten. Schritt a) wird zu Beginn des Verfahrens durchgeführt. Die Zusammensetzung der Bestandteile der reaktiven Mischung ist derart gewählt, dass die Summe der Bestandteile 100 Gew.-% (Gew.-% = Gewichtsprozent) bezogen auf das Gesamtgewicht der reaktiven Masse ergeben.

Vorzugsweise weist die carbonsäurehaltige Monomer-Komponente der reaktiven Mischung neben Itaconsäure und/oder Itaconsäurederivaten zumindest eine weitere carbonsäurehaltige Monomer-Komponente auf und/oder wird damit bereitgestellt, die aus der Gruppe einzeln oder in Kombination ausgewählt ist, die aus Acrylsäure, Methacrylsäure und Maleinsäure, besteht.

Erfindungsgemäße Derivate der Itaconsäure der carbonsäurehaltigen Monomer-Komponente sind das Anhydrid der Itaconsäure, der Methoxyester der Itaconsäure und/oder Ethoxyester der Itaconsäure. Erfindungsgemäß ist das Itaconsäurederivat der carbonsäurehaltigen Monomer-Komponente maximal an einer Carbonsäure derivatisiert und liegt beispielsweise als Itaconsäuremonoester vor.

Es ist möglich, dass der Anteil an Monomer der carbonsäurehaltigen Monomer-Komponente, bezogen auf die Gesamtmasse der reaktiven Mischung, aus einem Bereich von 10 Gew.-% bis 60 Gew.-%, bevorzugt von 20 Gew.-% bis 50 Gew.-%, weiter bevorzugt von 30 Gew.-% bis 40 Gew.-%, ausgewählt ist und/oder wird.

Vorzugsweise wird unter "carbonsäurehaltig" verstanden, dass ein Molekül, beispielsweise ein Monomer, vorliegt, das zumindest eine funktionelle Einheit des Typs -COOH enthält.

Vorzugsweise wird unter "nicht-carbonsäurehaltig" verstanden, dass ein Molekül, beispielsweise ein Monomer, vorliegt, das keine funktionelle Einheit des Typs -COOH enthält. Unter diese Definition fallen somit beispielsweise neben ungesättigten Kohlenwasserstoffen und/oder ungesättigten aromatischen Kohlenwasserstoffen auch beispielsweise Carboxylate und Carbonsäurederivate.

Vorzugsweise wird unter "löslich" verstanden, dass ein Salz oder Molekül, beispielsweise ein Monomer oder ein Polymer, eine Löslichkeit von zumindest 60 g/l bei Normklima im Gleichgewichtszustand in dem vorliegenden Lösemittel aufweist. Weist ein Molekül eine geringere Löslichkeit bei Normklima im Gleichgewichtszustand auf, so wird dieses als "unlöslich" verstanden. Wird die Löslichkeit auf ein Lösemittel in Form von Wasser bezogen, so kann das Salz oder Molekül, beispielsweise ein Monomer oder Polymer, "wasserlöslich" sein. Unter "wasserlöslich" wird somit vorzugsweise verstanden, dass ein Salz oder Molekül, beispielsweise ein Monomer oder ein Polymer, eine Löslichkeit von zumindest 60 g/l bei Normklima im Gleichgewichtszustand in Wasser aufweist. Weist ein Molekül eine geringere Wasserlöslichkeit bei Normklima im Gleichgewichtszustand auf, so wird dieses als "wasserunlöslich" verstanden. Unter Normklima wird eine Temperatur von 20 °C und ein Luftdruck von 1 bar verstanden.

Es ist möglich, dass die reaktive Mischung zumindest eine nicht-carbonsäurehaltige Monomer-Komponente aufweist oder mit dieser bereitgestellt wird. Vorzugsweise ist die nicht-carbonsäurehaltige Monomer-Komponente, einzeln oder in Kombination, ausgewählt aus der Gruppe, die aus Acrylamid und dessen Derivate, Estern der Acrylsäure, Estern der Methacrylsäure, Estern der Itaconsäure, Estern der Maleinsäure, Maleinsäureanhydrid, Terpenen, bevorzugt Myrcen, Styrol, Isopren, Butadien, Vinylether und/oder Kombinationen davon, besteht. Bevorzugt ist die nicht-carbonsäurehaltige Monomer-Komponente ausgewählt aus der Gruppe, die aus Acrylamid und dessen Derivate, Estern der Acrylsäure, Ester der Methacrylsäure, Estern der Itaconsäure, Terpenen oder Kombinationen davon, besteht. Weiter bevorzugt ist die nicht-carbonsäurehaltige Monomer-Komponente ausgewählt aus der Gruppe, die aus Acrylamid und dessen Derivate, Estern der Itaconsäure, Terpenen oder Kombinationen davon, besteht.

Vorzugsweise ist und/oder wird der Anteil an Monomer der nicht-carbonsäurehaltigen Monomer-Komponente bezogen auf die Gesamtmasse der reaktiven Mischung ausgewählt aus einem Bereich von mehr als 0 Gew.-% bis 30 Gew.-%, bevorzugt von mehr als 0 Gew.-% bis 20 Gew.-%, weiter bevorzugt von mehr als 0 Gew.-% bis 15 Gew.-%.

Es ist möglich, dass die nicht-carbonsäurehaltige Monomer-Komponente zumindest zu 80 Gew.-%, bevorzugt zu 100 Gew.-%, wasserlösliche Monomere umfasst.

Es ist möglich, dass die carbonsäurehaltige Monomer-Komponente und/oder die nicht-carbonsäurehaltige Monomer-Komponente und/oder das Polymer und/oder das Trennmittel biogene Bestandteile umfassen und/oder daraus bestehen, und/oder mit diesen bereitgestellt werden.

Vorzugsweise sind die carbonsäurehaltige Monomer-Komponente und/oder die nicht-carbonsäurehaltige Monomer-Komponente und/oder das Polymer und/oder das Trennmittel biologisch abbaubar. Die carbonsäurehaltige Monomer-Komponente und/oder die nicht-carbonsäurehaltige Monomer-Komponente und/oder das Polymer und/oder das Trennmittel können kompostierbar sein.

Unter "biologisch abbaubar" wird die Zerlegung einer chemischen Verbindung oder eines organischen Materials, beispielsweise die carbonsäurehaltige Monomer-Komponente und/oder die nicht-carbonsäurehaltige Monomer-Komponente und/oder das Polymer und/oder das Trennmittel, durch Mikroorganismen, beispielsweise Pilze und/oder Bakterien, in Gegenwart von Sauerstoff in Kohlenstoffdioxid, Wasser und Salze anderer vorhandener Elemente (Mineralisation) und insbesondere Biomasse, oder in Abwesenheit von Sauerstoff in Kohlenstoffdioxid, Methan, Mineralsalze, und insbesondere Biomasse, verstanden.

Unter "kompostierbar" soll dabei insbesondere verstanden werden, dass die carbonsäurehaltige Monomer-Komponente und/oder die nicht-carbonsäurehaltige Monomer-Komponente und/oder das Polymer und/oder das Trennmittel bei der Kompostierung durch biologische Prozesse während der Kompostierung zu Kohlenstoffdioxid, Wasser, Salze anderer vorhandener Elemente und insbesondere Biomasse in einer Geschwindigkeit abgebaut wird, die mit der anderer bekannter kompostierbarer Materialien übereinstimmt und, insbesondere neben der Biomasse, keine sichtbaren, erkennbaren und/oder toxischen Rückstände hinterlässt. Insbesondere genügt die carbonsäurehaltige Monomer-Komponente und/oder die nicht-carbonsäurehaltige Monomer-Komponente und/oder das Polymer und/oder das Trennmittel der DIN EN 13432:2000-12 (Ausgabedatum: 12.2000, "Verpackung - Anforderungen an die Verwertung von Verpackungen durch Kompostierung und biologischen Abbau - Prüfschema und Bewertungskriterien für die Einstufung von Verpackungen; Deutsche Fassung EN 13432:2000") und/oder der australischen Norm AS 4736:2006 (Ausgabedatum: 2006, "Biodegradable plastics - Biodegradable plastics suitable for composting and other microbial treatment") und/oder der US-Norm ASTM D6400 (Ausgabedatum: 05.1999, "Standard Specification for Compostable Plastic") und/oder dem ISO-Standard ISO17088:2008 (Ausgabedatum: 06.2012, "Festlegungen für kompostierbare Kunststoffe").

Die genannten Normen umfassen eine chemische Prüfung und Offenlegung aller Inhaltsstoffe. Insbesondere hält hierbei das Trennmittel, bevorzugt Polymer, jeweilige Grenzwerte für Schwermetalle ein. Zusätzlich ist es für das Trennmittel, bevorzugt Polymer, nachweisbar, dass mindestens 90 Gew.-% des organischen Materials in 180 Tagen in CO₂ umgewandelt werden (bzw. mindestens 60 Gew.-% nach ASTM D6400). Weiter ist es möglich, dass das von dem Trennmittel, bevorzugt Polymer, nach 12 Wochen Kompostierung in industriellen und/oder halbindustriellen Kompostierbedingungen und anschließender Absiebung durch ein Sieb mit 2 mm-Maschenweite nicht mehr als 10 Gew.-% Trockenmasse bezogen auf ursprüngliche Einwaage verbleiben. Dabei dürfen insbesondere keine negativen Auswirkungen auf den Kompostierprozess erfolgen. Vorzugsweise ist abschließend eine Ökotoxitätsanalyse durchzuführen, wobei für ein positives Ergebnis kein negativer Effekt von resultierenden Komposten auf das Pflanzenwachstum im Vergleich zu weiteren Komposten (agronomischer Test) ersichtlich sein darf.

Es ist möglich, dass die reaktive Mischung ein Lösemittel, bevorzugt ein organisches Lösemittel, aufweist oder mit diesem bereitgestellt wird, das einzeln oder als Mischungen ausgewählt ist, aus der Gruppe, die aus Ethanol, 1-Propanol, 2-Propanol, Aceton, 2-Butanon (MEK), Acetat, insbesondere Ethylacetat und Lactylacetat, besteht. Das organische Lösemittel ist bei Normklima mit Wasser mischbar, bevorzugt in einem 1:1 Verhältnis mit Wasser mischbar.

Alternativ oder zusätzlich ist es möglich, dass die reaktive Mischung ein Lösemittel aufweist und/oder mit diesem bereitgestellt wird, das Wasser umfasst und/oder daraus besteht. Bevorzugt ist das Lösemittel der reaktiven Mischung Wasser.

Es ist möglich, dass die reaktive Mischung einen pH-Wert aufweist, der ausgewählt ist aus einem Bereich von 3 bis 14, bevorzugt von 5 bis 12, weiter bevorzugt von 6 bis 9, und/oder mit diesem bereitgestellt wird. Durch den vorstehenden pH-Wert wird die Löslichkeit des Monomers und/oder des Polymers im Lösemittel erhöht und die Polymerisation gefördert. Es ist möglich, dass die reaktive Mischung gelöste Hydroxide der Alkalimetalle der 1. Hauptgruppe des Periodensystems umfasst, bevorzugt NaOH und/oder KOH.

Es ist möglich, dass der Anteil des Lösemittels, bezogen auf die Gesamtmasse der reaktiven Mischung, ausgewählt ist und/oder wird aus einem Bereich von 10 Gew.-% bis 90 Gew.-%, bevorzugt von 30 Gew.-% bis 80 Gew.-%, weiter bevorzugt von 40 Gew.-% bis 60 Gew.-%.

Unter Lösemittel wird ein Medium verstanden, in dem die weiteren Bestandteile der reaktiven Mischung, der Polymerlösung und/oder des Trennmittels verdünnt werden. Bevorzugt wird das Lösemittel bei der Reaktion der Bestandteile der reaktiven Mischung zum Polymer der Polymerlösung nicht verbraucht. Vorzugsweise weist ein Lösemittel einen Siedepunkt von höchstens 200°C auf. Als organisches Lösemittel wird ein Lösemittel verstanden, das zumindest ein Kohlenstoffatom in dessen molekularer Struktur aufweist.

Vorzugsweise weist die reaktive Mischung einen Initiator, bevorzugt einen Initiator für eine radikalische Polymerisation, auf und/oder wird mit diesem bereitgestellt.

Es ist möglich, dass der Anteil an Initiator, bezogen auf die Gesamtmasse der reaktiven Mischung, aus einem Bereich von 0,05 Gew.-% bis 2,5 Gew.-%, bevorzugt von 0,1 Gew.-% bis 1,5 Gew.-%, weiter bevorzugt von 0,5 Gew.-% bis 1,2 Gew.-%, ausgewählt ist und/oder wird.

Vorzugsweise ist und/oder wird der Initiator ausgewählt aus der Gruppe, die aus Azoverbindungen, Peroxiden oder Mischungen davon, besteht.

Unter Additiv wird ein Bestandteil verstanden, der zugesetzt wird, um eine definierte Wirkung zu haben und/oder eine Eigenschaft beispielsweise einer Mischung, Masse und/oder Lösung zu erteilen, wobei das Additiv einen Anteil von 1,5 Gew.-% oder weniger, jeweils bezogen auf das Gesamtgewicht der Mischung, Masse oder Lösung, aufweist. Der Initiator, das Lösemittel die carbonsäurehaltige Monomer-Komponente und/oder die nicht-carbonsäurehaltige Monomer-Komponente und/oder das daraus erhaltene Polymer werden nicht als Additiv verstanden.

Durch die Verwendung von Additiven kann die Verarbeitbarkeit der reaktiven Mischung, des Polymers und/oder des Trennmittels verbessert werden. Weiter wird damit die Beständigkeit des Trennmittels oder einer daraus erhaltenen Schicht gegenüber mechanischen und chemischen Einflüssen erhöht.

Vorzugsweise weist eine für das erfindungsgemäße Verfahren geeignete reaktive Mischung folgende Zusammensetzung auf und/oder wird damit bereitgestellt, wobei die Angaben der einzelnen Bestandteile jeweils bezogen auf die Gesamtmasse der reaktiven Mischung sind und wobei die Bestandteile so ausgewählt werden, dass sie in Summe 100 Gew.-% ergeben:

| | |
|---|---|
| Carbonsäurehaltige Monomer-Komponente: | 10 Gew.-% - 60 Gew.-%, |
| Nicht-carbonsäurehaltige Monomer-Komponente: | 0 Gew.-% - 30 Gew.-%, |
| Lösemittel: | 10 Gew.-% - 90 Gew.-%, |
| Initiator: | 0,05 Gew.-% - 2,5 Gew.-%, |

| | |
|---|---|
| Weiter bevorzugt: | |
| Carbonsäurehaltige Monomer-Komponente: | 20 Gew.-% - 50 Gew.-%, |
| Nicht-carbonsäurehaltige Monomer-Komponente: | 0 Gew.-% - 20 Gew.-%, |
| Lösemittel: | 30 Gew.-% - 80 Gew.-%, |
| Initiator: | 0,1 Gew.-% - 1,5 Gew.-%, |

| | |
|---|---|
| Noch weiter bevorzugt: | |
| Carbonsäurehaltige Monomer-Komponente: | 30 Gew.-% - 40 Gew.-%, |
| Nicht-carbonsäurehaltige Monomer-Komponente: | 0 Gew.-% - 15 Gew.-%, |
| Lösemittel: | 40 Gew.-% - 60 Gew.-%, |
| Initiator: | 0,5 Gew.-% - 1,2 Gew.-%. |

In Schritt b) wird aus der in Schritt a) bereitgestellten reaktiven Mischung eine Polymerlösung erhalten. Die Polymerlösung umfasst ein Polymer, dass zumindest die carbonsäurehaltige Monomer-Komponente, insbesondere die Monomer-Komponenten der in Schritt a) bereitgestellten reaktiven Mischung, aufweist. Das Polymer weist als Monomereinheit, insbesondere als carbonsäurehaltige Monomereinheit, zumindest Itaconsäure und/oder Itaconsäurederivate auf. Weiter weist die Polymerlösung ein Lösemittel auf. Das Polymer ist zumindest teilweise in dem Lösemittel, bevorzugt in Form von Wasser, gelöst. Es ist möglich, dass das Polymer im Lösemittel, bevorzugt in Form von Wasser, zu zumindest 30 g/l, bevorzugt zu zumindest 60 g/l, bei Normklima im Gleichgewichtszustand im Lösemittel, bevorzugt in Form von Wasser, gelöst vorliegt. Schritt b) wird bevorzugt nach Schritt a) durchgeführt.

Es ist möglich, dass Schritt b) bei einer Temperatur der reaktiven Mischung durchgeführt wird, die ausgewählt ist aus einem Bereich von 20 °C bis 110 °C, bevorzugt von 40 °C und 85 °C, weiter bevorzugt von 50 °C bis 70 °C.

Es ist möglich, dass in Schritt b) das Lösemittel der reaktiven Mischung nach dem das Polymer erhalten wurde, abgetrennt wird, beispielsweise ausgewählt aus der Gruppe, die aus Filtration, Absaugen, Verdampfen, Vakuumtrocknen, Beaufschlagen mit IR-Strahlung, oder Ausgefrieren oder Kombinationen davon, besteht. Weiter ist es dann möglich, dass das Polymer einem weiteren Lösemittel zugeführt wird. Mit anderen Worten ist es möglich, dass das Lösemittel der reaktiven Mischung ein anderes Lösemittel ist im Vergleich zu dem Lösemittel der Polymerlösung ist.

Vorzugsweise umfasst das Lösemittel der Polymerlösung Wasser und/oder besteht im Wesentlich daraus. Insbesondere ist das Polymer wasserlöslich.

Es ist möglich, dass das Polymer, insbesondere vor der Decarboxylierung, die carbonsäurehaltige Monomer-Komponente, bevorzugt Itaconsäure und/oder Itaconsäurederivate, weiter bevorzugt Itaconsäure, ausgewählt aus einem Bereich von 25 Gew.-% bis 99,95 Gew.-%, bevorzugt von 40 Gew.-% bis 99,95 Gew.-%, weiter bevorzugt von 55 Gew.-% bis 99,95 Gew.-%, aufweist. Vorzugweise besteht die carbonsäurehaltige Monomer-Komponente aus Itaconsäure und/oder Itaconsäurederivaten, bevorzugt Itaconsäure.

Es ist möglich, dass das Polymer, insbesondere vor der Decarboxylierung, die nicht-carbonsäurehaltige Monomer-Komponente, ausgewählt aus einem Bereich von mehr als 0 Gew.-% bis 75 Gew.-%, bevorzugt von 0 Gew.-% bis 60 Gew.-%, weiter bevorzugt von 0 Gew.-% bis 45 Gew.-%, aufweist.

Insbesondere weist das Polymer, insbesondere vor der Decarboxylierung, den Initiator, ausgewählt aus einem Bereich von 0,05 Gew.-% bis 2 Gew.-%, bevorzugt von 0,1 Gew.-% bis 1,5 Gew.-%, weiter bevorzugt von 0,5 Gew.-% bis 1,1 Gew.-%, auf.

Das Polymer, insbesondere vor der Decarboxylierung, weist bevorzugt einen Wert für das Zahlenmittel der molaren Masse auf, der ausgewählt ist aus einem Bereich von 500 g/mol bis 500.000 g/mol, bevorzugt von 750 g/mol bis 100.000 g/mol, weiter bevorzugt von 1000 g/mol bis 50.000 g/mol, noch weiter bevorzugt von 1500 g/mol bis 20.000 g/mol.

Es ist möglich, dass die carbonsäurehaltige Monomer-Komponente, die das Polymer aufweist, neben Itaconsäure und/oder Itaconsäurederivaten zumindest eine weitere carbonsäurehaltige Monomer-Komponente aufweist, die aus der Gruppe einzeln oder in Kombination ausgewählt ist, die aus Acrylsäure, Methacrylsäure, Maleinsäure, besteht. Der Anteil der carbonsäurehaltigen Monomer-Komponente, insbesondere von Itaconsäure und/oder Itaconsäurederivaten, im Polymer bezogen auf die Gesamtmasse des Polymers ist insbesondere ausgewählt aus dem Bereich von 2,5 Gew.-% bis 100 Gew.-%, bevorzugt von 5 Gew.-% bis 80 Gew.-%, weiter bevorzugt von 10 Gew.-% bis 50 Gew.-%, insbesondere vor der Decarboxylierung.

Bevorzugt weist das Polymer zumindest eine nicht-carbonsäurehaltige Monomer-Komponente auf, deren Komponente oder Derivate einzeln oder in Kombination aus der Gruppe ausgewählt ist, die aus Acrylamid, Estern der Acrylsäure, Estern der Methacrylsäure, Estern der Itaconsäure, Estern der Maleinsäure, Maleinsäureanhydrid, Terpenen, Myrcen, Styrol, Isopren, Butadien, Vinylethern, besteht. Der Anteil der nicht-carbonsäurehaltigen Monomer-Komponente bezogen auf die Gesamtmasse des Polymers ist vorzugweise ausgewählt aus dem Bereich von mehr als 0 Gew.-% bis 97,5 Gew.-%, bevorzugt von 5 Gew.-% bis 90 Gew.-%, weiter bevorzugt von 15 Gew.-% bis 85 Gew.-%, insbesondere vor der Decarboxylierung.

Das Polymer, insbesondere vor der Decarboxylierung, kann einen Wert für die Glasübergangstemperatur aufweisen, der ausgewählt aus einem Bereich von - 20 °C bis 110 °C, bevorzugt von -20 °C bis 50 °C, weiter bevorzugt von -10 °C bis 25 °C, ist.

**In** Schritt c) wird ein Trennmittel erhalten. Das Trennmittel umfasst die Polymerlösung, die das in Schritt b) erhaltene Polymer aufweist. Das Trennmittel, bevorzugt das Polymer, liegt vorzugsweise vor seiner Verwendung, also dem Anordnen als Schicht auf zumindest einer Oberfläche eines Formelements, bevorzugt auf zumindest einer Oberfläche einer Schalung, in einem Zustand vor, in dem noch keine Decarboxylierung erfolgte und ist zumindest teilweise decarboxylierbar. Insbesondere wird CO₂ aus dem Polymer des Trennmittels während oder nach der Verwendung des Trennmittels freigesetzt. Durch die Decarboxylierung wird das CO₂ vom Polymer abgespalten und freigesetzt. Die Menge des freigesetzten Polymers ist abhängig von der Polymerstruktur. Es ist möglich, dass aus der carbonsäurehaltige Monomer-Komponente, bevorzugt Itaconsäure und/oder Itaconsäurederivat, zumindest teilweise, durch Decarboxylierung CO₂ freigesetzt wird. Es ist hierbei möglich, dass die Länge der Polymerketten und/oder die Polymermasse reduziert wird.

Bevorzugt setzt das Trennmittel das CO₂ nach und/oder während einem Kontaktieren mit einer mineralischen Baustoff-Mischung frei. Weiter bevorzugt setzt das Trennmittel das CO₂ während einem zumindest teilweisen Erstarren und/oder Erhärten der kontaktierten mineralischen Baustoff-Mischung frei. Die Baustoff-Mischung ist insbesondere fließfähig oder plastisch verformbar. Weiter weist die Baustoff-Mischung Wasser und wenigstens ein mineralisches Bindemittel auf. Alternativ oder zusätzlich ist es auch möglich, dass das Trennmittel, bevorzugt Polymer, das CO₂ nach einem Anordnen auf zumindest einer Oberfläche eines Formelements, vorzugsweise einer Schalung, freisetzt und/oder decarboxyliert, bevorzugt bevor es mit der mineralischen Baustoff-Mischung kontaktiert wird.

Die Decarboxylierung des Trennmittels, insbesondere des Polymers, wird bevorzugt durch das Kontaktieren des Trennmittels mit einer fließfähigen oder plastisch verformbaren mineralischen Baustoff-Mischung initiiert.

Alternativ oder zusätzlich kann das Trennmittel mit einem Flüssigkeitsvolumen kontaktiert, bevorzugt besprüht und/oder übergossen, werden, das die vorstehenden Anionen und/oder Kationen aufweist und alkalisch ist.

Es ist möglich, dass, insbesondere als eine erste mögliche Wirkweise des freigesetzten CO₂, durch das CO₂ an der Kontaktstelle der mineralischen Baustoff-Mischung und der Oberfläche des Formelements, bevorzugt der Schalung, auf der das Trennmittel angeordnet ist, eine poröse Matrix eines mineralischen Formkörpers erzeugt wird.

Zusätzlich ist es möglich, dass durch die Decarboxylierung des Polymers die Kettenlänge und/oder Polymermasse des Polymers reduziert wird. Hierdurch ist es möglich, dass insbesondere die wasserlöslichen Anteile des Polymers in die mineralische Baustoff-Mischung diffundieren. Vorzugsweise können die die wasserlöslichen Anteile des Polymers die Erzeugung der porösen Matrix im mineralischen Formkörpers fördern.

Die erhaltene poröse Matrix des mineralischen Formkörpers weist im Vergleich zu der Normfestigkeit der mineralischen Baustoff-Mischung eine geringere Festigkeit auf. Somit wird die Haftkraft zwischen Schalung und Beton herabgesetzt, so dass der mineralische Formkörper sich leicht entschalen lässt. Die Normfestigkeit oder auch Druckfestigkeit kann unterschiedlichen Beton-Festigkeitsklassen zugeordnet werden, wobei sich je nach Anforderung eine andere Festigkeitsklasse und daraus entsprechend eine andere Druckfestigkeit ergibt.

Alternativ oder zusätzlich ist es möglich, insbesondere als eine zweite Wirkweise des freigesetzten CO₂, dass das CO₂ an der Oberfläche der mineralischen Baustoff-Mischung zu Kohlensäure reagiert. Die Kohlensäure kann insbesondere im Flüssigkeitsvolumen von Poren der mineralischen Baustoff-Mischung gelöst vorliegendem Ca(OH)₂ reagieren, wobei Calciumcarbonat ausfällt. Vorstehende Reaktion wird bevorzugt als Carbonatisierung bezeichnet.

Die vorstehende, insbesondere eine zweite, Wirkweise kann durch die Teilschritte, die in den Gleichungen (2), (3) und (4) gezeigt sind, beschrieben werden. In Gleichung (5) sind die Teilschritte zusammengefasst:

*Ca*(*OH*)₂ ⇄ *Ca*²⁺ *+* 2*OH⁻* (2)

*CO*₂ + *H*₂*O* ⇄ *H*₂*CO*₃ (3)

*Ca*(*OH*)₂ *+ H*₂*CO*₃ ⇄ *CaCO*₃ *+* 2*H*₂*O* (4)

*Ca*(*OH*)₂ *+ CO*₂ *⇄ CaCO*₃ *+ H*₂*O* (5)

Calciumhydroxid weist im Vergleich zu Calciumcarbonat ein größeres Volumen auf, wobei sich insbesondere eine Volumenzunahme von 11 % ergeben kann. Hierdurch ist es möglich, dass das Porenvolumen der mineralischen Baustoff-Mischung reduziert wird. Weiter ist es möglich, dass eine Grenzfläche zwischen Oberfläche des Formelements, bevorzugt Schalung, erhalten wird, die im Vergleich zur mineralischen Baustoff-Mischung vor der Carbonatisierung und eine gleichmäßigere und/oder glattere Oberfläche aufweist. Mit anderen Worten bildet sich eine Art Steinhaut aus. Vorzugweise kann die Kontaktfläche zwischen der mineralischen Baustoff-Mischung und der Oberfläche des Formelements, bevorzugt der Schalung, reduziert werden, was die Trennung des Formelements, bevorzugt Schalung, von dem mineralischen Formkörper verbessert.

Das Wirkprinzip des Trennmittels basiert somit insbesondere auf dem freigesetzten CO₂. Das CO₂ kann an der dem Formelement zugewandten Oberfläche der mineralischen Baustoff-Mischung wie oben beschrieben eine poröse Matrix in der mineralischen Baustoff-Mischung erzeugen und/oder das Porenvolumen reduzieren und eine glattere Grenzfläche erzeugen. Dabei hinterlässt das Trennmittel bevorzugt keine Rückstände auf der Oberfläche des Formelements, bevorzugt auf der Oberfläche der Schalung. Sollten Rückstände verbleiben, so können diese mit Wasser und einem gewöhnlichen Lappen mechanisch entfernt werden. Es ist möglich, dass alle der beschriebenen Wirkweisen des freigesetzten CO₂ bei der Herstellung eines mineralischen Formkörpers vorliegen und/oder dass eine der Wirkweisen bevorzugt vorliegt. Beispielsweise ist es möglich, dass die poröse Matrix auf der dem Formelement, bevorzugt Schalung, zugewandten Seite der glatteren Grenzfläche erhalten wird, wodurch eine besonders gute Trennwirkung erreicht wird.

Insbesondere umfasst die fließfähige oder plastisch verformbare Baustoff-Mischung zumindest einen Bestandteil, der die Decarboxylierung katalysiert. Vorzugsweise wird die Decarboxylierung ionisch, insbesondere alkalisch, katalysiert. Es ist möglich, dass die Decarboxylierung thermisch katalysiert wird.

Vorzugsweise weist die fließfähige oder plastisch verformbare Baustoff-Mischung zweiwertige oder mehrwertige Kationen zumindest eines Metalls auf, wobei das zumindest eine Metall vorzugsweise ausgewählt ist aus der Gruppe, die aus Mg, Ca, Sr, Ba, Al, Fe, Co, oder Mischungen davon, besteht. Bevorzugt liegen die Kationen in Form von wasserlöslichen Salzen vor.

Die Erfinder haben überraschenderweise festgestellt, dass bei Anwesenheit von zweiwertigen oder mehrwertigen Kationen die Decarboxylierung und die Freisetzung von CO₂ besonders gut durchgeführt werden kann. Vorzugsweise können zwei oder mehrwertige Kationen die Decarboxylierung des Polymers, bevorzugt der Itaconsäure und/oder Itaconsäurederivate, katalysieren. Die Anwesenheit von Alkalimetallen der 1. Hauptgruppe des Periodensystems, wie Natrium oder Kalium, sowie andere einwertige Ionen, wie Ammonium, beispielsweise in einer alkalischen Lösung, haben keinen wesentlichen Einfluss auf die Decarboxylierung. Es ist möglich, dass sich entsprechende Salze der Itaconsäure bilden, die eine höhere Wasserlöslichkeit aufweisen im Vergleich zur Itaconsäure. Mit anderen Worten ist das Trennmittel stabil gegenüber Alkalimetallen der 1. Hauptgruppe des Periodensystems, da diese keine Decarboxylierung initiieren.

Unter "alkalisch" wird vorzugsweise verstanden, dass die fließfähige oder plastisch verformbare mineralische Baustoff-Mischung und/oder eine Lösung einen pH-Wert ausgewählt aus einem Bereich von 8 bis 14, bevorzugt von 10 bis 14, weiter bevorzugt von 12 bis 14, aufweist.

Die mineralische Baustoff-Mischung umfasst bevorzugt Beton, Mörtel, Kalksandstein, Silikat-Keramik oder eine Kombination davon, oder daraus besteht. Vorzugsweise umfasst das wenigstens eine mineralische Bindemittel ein hydraulisches Bindemittel, ein nicht-hydraulisches Bindemittel oder eine Mischung davon. Weiter ist es möglich, dass das wenigstens eine mineralische Bindemittel aus der Gruppe ausgewählt wird, die aus Calciumsilikathydraten, Zement, Kalk, Ton, Gips, Lehm, Magnesiabinder und Kombinationen davon, besteht.

Ein Verfahren zur Herstellung eines mineralischen Formkörpers, in dem das Trennmittel verwendet werden kann, weist zumindest die folgenden Teilschritte auf, die insbesondere in der angegebenen Reihenfolge durchgeführt werden:
i) Bereitstellen wenigstens eines Formelements, vorzugsweise einer Schalung, mit zumindest einer Oberfläche, auf der das erfindungsgemäße Trennmittel und/oder nach dem erfindungsgemäßen Verfahren in Schritt c) erhaltene Trennmittel in Form einer Schicht angeordnet ist,
ii) Applizieren einer fließfähigen oder plastisch verformbaren, mineralischen Baustoff-Mischung, die Wasser und wenigstens ein mineralisches Bindemittel umfasst, auf der zumindest einen mit dem Trennmittel beschichteten Oberfläche des Formelements, vorzugsweise der Schalung,
iii) Zumindest teilweises Erstarren der mineralischen Baustoff-Mischung unter Erhalt eines formstabilen, mineralischen Grünkörpers, und Erhärten der mineralischen Baustoff-Mischung, bevorzugt des formstabilen, mineralischen Grünkörpers,
iv) Entfernen des Formelements, bevorzugt der Schalung, von der mineralischen Baustoff-Mischung und Erhalt eines mineralischen Formkörpers.

Bevorzugt spaltet das Trennmittel nach Schritt i), in Schritt ii) und/oder in Schritt iii) CO₂ aus der Polymerstruktur ab.

Das Trennmittel wird bevorzugt auf der zumindest einen Oberfläche des Formelements, bevorzugt auf der zumindest einen Oberfläche der Schalung, durch ein Verfahren, das ausgewählt ist aus der Gruppe, die aus Sprühverfahren, Pinselverfahren oder Rollenverfahren oder Kombinationen davon, besteht, angeordnet. Vorzugsweise wird das Trennmittel vollflächig auf der zumindest einen Oberfläche des Formelements, bevorzugt auf der zumindest einen Oberfläche der Schalung, angeordnet. Bevorzugt wird das Trennmittel auf allen Oberflächen des Formelements, bevorzugt auf der zumindest einen Oberfläche der Schalung, die mit der mineralischen Baustoff-Mischung kontaktiert werden vollflächig angeordnet.

Vorzugsweist wird die Auftragsmenge des Trennmittels ausgewählt aus einem Bereich von 50 g/m² bis 400 g/m², bevorzugt von 100 g/m² bis 250 g/m², weiter bevorzugt von 125 g/m² bis 175 g/m², bezogen auf eine nicht-saugende Schalung.

Das Trennmittel kann in Form einer Schicht unabhängig von einem Feuchtegehalt des Trennmittels als Trennmittel wirken, d. h. weist eine trennende Wirkung auf. Mit anderen Worten kann die Decarboxylierung des Trennmittels, bevorzugt Polymers, unabhängig vom Feuchtegehalt des Trennmittels erfolgen und/oder das CO₂ ist aus dem Trennmittel, bevorzugt Polymer, unabhängig vom Feuchtegehalt freisetzbar. Hierdurch kann das Trennmittel im trockenen Zustand wie auch im feuchten Zustand wirken.

Unter dem trockenen Zustand wird eine trockene Schicht, bevorzugt nach dem Anordnen, verstanden, die bevorzugt einen Anteil an Bestandteilen, die einen Siedepunkt von niedriger als 110 °C aufweisen, ausgewählt aus einem Bereich von 0 Gew.-% bis 10 Gew.-%, vorzugsweise von 0 Gew.-% bis 8 Gew.-%, weiter bevorzugt von 0 Gew.-% bis 5 Gew.-%, umfasst, bezogen auf die Gesamtmasse der Bestandteile der Schicht. Ein Trocknen wird vorzugsweise bis zur Massenkonstanz der Bestandteile der Schicht durchgeführt. Unter dem feuchten Zustand wird das Trennmittel vor der Verwendung verstanden, bevorzugt wie in Schritt c) bereitgestellt wird, wobei das Trennmittel die Polymerlösung aufweist.

Das Trennmittel weist einen Indikator auf oder wird damit bereitgestellt, wodurch das Trennmittel im trockenen Zustand einen anderen Farbeindruck aufweist im Vergleich zum feuchten Zustand.

Das Trennmittel weist somit vor der Verwendung, umfassend die Polymerlösung, einen anderen Farbeindruck im Vergleich zu einer trockenen Schicht auf. Beispielsweise ist es möglich, dass der Indikator, im feuchten Zustand des Trennmittels einen Farbeindruck aufweist und der Indikator im trockenen Zustand des Trennmittels farblos ist. Im trockenen Zustand ist der Indikator somit für einen Betrachter vorzugsweise nicht erkennbar.

Ein geeigneter Indikator ist bevorzugt aus ein oder mehreren Leukofarbstoffen ausgewählt.

Der Indikator bietet den Vorteil, dass beim Anordnen der Schicht auf der zumindest einen Oberfläche des Formelements, bevorzugt auf der zumindest einen Oberfläche der Schalung, erkennbar ist, wo bereits das Trennmittel angeordnet wurde. Hierdurch kann ein besonders gleichmäßiger Auftrag ermöglicht werden.

Es ist möglich, dass das Trennmittel ein Verlaufsadditiv umfasst und/oder damit bereitgestellt wird, bevorzugt ausgewählt aus einem Bereich von mehr als 0 Gew.-% bis 10 Gew.-%, weiter bevorzugt von mehr als 0 Gew.-% bis 7,5 Gew.-%, noch weiter bevorzugt von mehr als 0 Gew.-% bis 5,5 Gew.-%, jeweils bezogen auf das Gesamtgewicht des Trennmittels. Das Verlaufsadditiv ermöglicht das Ausbilden von gleichmäßigen Filmen und Schichten.

Unter dem Gesamtgewicht des Trennmittels wird der feuchte Zustand und/oder das Gesamtgewicht des Trennmittels verstanden mit dem das Trennmittel in Schritt c) erhalten wird und vor dessen Verwendung.

Es ist auch möglich, dass das Trennmittel einen Verdicker umfasst und/oder damit bereitgestellt wird, bevorzugt ausgewählt aus einem Bereich von mehr als 0 Gew.-% bis 2 Gew.-%, weiter bevorzugt von mehr als 0 Gew.-% bis 1,5 Gew.-%, noch weiter bevorzugt von mehr als 0 Gew.-% bis 1,2 Gew.-%, jeweils bezogen auf das Gesamtgewicht des Trennmittels. Durch den Verdicker wird eine gleichmäßige Schichtstärke der Schicht auch an vertikalen Oberflächen ermöglicht.

Das Trennmittel von Schritt c) weist die Polymerlösung von Schritt b) auf. Vorzugsweise umfasst das Trennmittel die Polymerlösung ausgewählt aus einem Bereich von 0,01 Gew.-% bis 100 Gew.-%, bevorzugt von 0,01 Gew.-% bis 50 Gew.-%, weiter bevorzugt von 0,01 Gew.-% bis 20 Gew.-% und/oder wird derart bereitgestellt, jeweils bezogen auf das Gesamtgewicht des Trennmittels.

Das Trennmittel von Schritt c) weist insbesondere die Polymerlösung von Schritt b) auf. Vorzugsweise umfasst bei einer bevorzugten Ausführungsform die Polymerlösung das Polymer ausgewählt aus einem Bereich von 0,005 Gew.-% bis 50 Gew.-%, bevorzugt von 0,005 Gew.-% bis 25 Gew.-%, weiter bevorzugt von 0,005 Gew.-% bis 10 Gew.-% und/oder wird derart bereitgestellt, jeweils bezogen auf das Gesamtgewicht des Trennmittels.

Vorzugsweise umfasst das Lösemittel das Trennmittel Wasser und/oder besteht im Wesentlich daraus.

Vorzugsweise weist das Trennmittel Lösemittel, bevorzugt in Form von Wasser, ausgewählt aus einem Bereich von mehr als 0 Gew.-% bis 99,99 Gew.-%, bevorzugt von 50 Gew.-% bis 99,99 Gew.-%, weiter bevorzugt von 80 Gew.-% bis 99,99 Gew.-%, auf und/oder wird damit bereitgestellt, jeweils bezogen auf das Gesamtgewicht des Trennmittels.

Vorzugsweise weist ein erfindungsgemäßes Trennmittel folgende Zusammensetzung auf und/oder wird damit bereitgestellt, wobei die Angaben der einzelnen Bestandteile jeweils bezogen auf das Gesamtgewicht des Trennmittels sind und/oder mit dem es bereitgestellt wird, und wobei die Bestandteile so ausgewählt werden, dass sie in Summe 100 Gew.-% ergeben:

| | |
|---|---|
| Polymerlösung: | 0,01 Gew.-% - 100 Gew.-%, |
| Lösemittel: | 0 Gew.-% - 99,99 Gew.-%, |
| Verlaufsadditiv: | 0 Gew.-% - 10 Gew.-%, |
| Verdicker: | 0 Gew.-% - 2 Gew.-%, |

| | |
|---|---|
| Weiter bevorzugt: | |
| Polymerlösung: | 0,01 Gew.-% - 50 Gew.-%, |
| Lösemittel: | 50 Gew.-% - 99,99 Gew.-%, |
| Verlaufsadditiv: | 0 Gew.-% - 7,5 Gew.-%, |
| Verdicker: | 0 Gew.-% - 1,5 Gew.-%, |

| | |
|---|---|
| Noch weiter bevorzugt: | |
| Polymerlösung: | 0,01 Gew.-% - 20 Gew.-%, |
| Lösemittel: | 80 Gew.-% - 99,99 Gew.-%, |
| Verlaufsadditiv: | 0 Gew.-% - 5,5 Gew.-%, |
| Verdicker: | 0 Gew.-% - 1,2 Gew.-%. |

Die dynamische Viskosität ist und/oder wird bevorzugt ausgewählt aus einem Bereich von 1 mPas bis 300 Pas, bevorzugt von 2 mPas bis 200 mPas, weiter bevorzugt von 3 mPas bis 150 mPas, noch weiter bevorzugt von 3 mPas bis 100 mPas.

Insbesondere beim Anordnen auf einer vertikalen Oberfläche weist das Trennmittel eine dynamische Viskosität auf, die aus einem Bereich von 50 mPas bis 300 mPas, bevorzugt von 75 mPas bis 200 mPas, weiter bevorzugt von 100 mPas bis 150 mPas, ausgewählt ist.

Insbesondere beim Aufbringen auf einer horizontalen Oberfläche weist das Trennmittel eine dynamische Viskosität auf, die aus einem Bereich von 1 mPas bis 300 mPas, bevorzugt von 2 mPas bis 200 mPas, weiter bevorzugt von 3 mPas bis 100 mPas, ausgewählt ist.

Die dynamische Viskosität wird jeweils nach der in DIN EN ISO 2884-1:2006-09 (Ausgabedatum: 2006-09, "Beschichtungsstoffe - Bestimmung der Viskosität mit Rotationsviskosimetern - Teil 1: Kegel-Platte-Viskosimeter bei hohem Geschwindigkeitsgefälle (ISO 2884-1:1999); Deutsche Fassung EN ISO 2884-1:2006") beschriebenen Methode der Viskositätsbestimmung mittels Rotationsviskosimeter, insbesondere unter Verwendung eines Kegelplattenviskosimeter der Fa. Thermo Scientific, Modell Haake Mars 60 mit einer Kegel-Platte Messgeometrie, bestimmt.

Das Kegelplattenviskosimeter ist ein Messgerät zur Bestimmung der Viskosität, insbesondere dynamischen Viskosität, und besteht im Wesentlichen aus einem Messkopf und einer stationären Aufnahme für ein zu messendes Medium. In dem Messkopf befinden sich außerdem ein oberes Temperiermodul und eine Messachse, zur Aufnahme eines Rotors, wobei der Rotor zur Aufnahme verschiedener Kegelplatten ausgebildet ist. Eine Kegelplatte ist im Wesentlichen eine runde Messplatte in deren Zentrum eine kleine Spitze angeordnet ist. Der Kegeldurchmesser liegt in der Regel bei 24 mm mit einem Kegelwinkel von 0,5 ° (+/- 2'), insbesondere von der Spitze zur Messplatte. Des Weiteren befindet sich in der stationären Aufnahme ein unteres Temperiermodul. Das obere und untere Temperiermodul sorgen dafür, dass der Rotor und das zu messende Medium die gleiche Temperatur haben. Das zu messende Medium wird in die stationäre Aufnahme eingebracht. Die stationäre Aufnahme kann eine Platte aufweisen. Die Kegelplatte liegt unter Ausbildung eines gewissen Spaltmaßes auf dem Medium auf und kann sich somit frei in dem Medium bewegen. Unter dem Spaltmaß wird der Abstand von der Spitze der Kegelplatte zur unteren stationären Aufnahme verstanden. Kegelplattenviskosimeter arbeiten mit einem Elektromotor, der mit konstanter Drehzahl die Kegelplatte antreibt, sodass dessen Spitze eine starre temperaturgeregelte Platte berührt. Das Drehmoment kann mechanisch oder elektronisch gemessen werden. Für die routinemäßige Messung der Viskosität bei hohem Geschwindigkeitsgefälle werden Kegelplattenviskosimeter häufig verwendet. Das Gerät ist so konstruiert, dass die Einheit, die aus Kegelplatte und Motor besteht, leicht angehoben werden kann, zuerst, wenn die Prüfflüssigkeit auf die Platte gegeben wird, und später, um nach jeder Messung gründliches Reinigen zu ermöglichen. Wenn die Flüssigkeit, bevorzugt das zu messende Medium, verwendet wird, füllt diese nur den kleinen Spalt zwischen der Platte und dem Kegel aus. Das Kegelplattenviskosimeter arbeitet bevorzugt bei einer Drehzahl von 750 U/min (+/- 10 U/min) in einem Viskositätsbereich von 0 Pas bis 1 Pas. Dabei wird vorzugsweise mit einer Schergeschwindigkeit von 9000 s⁻¹ bis 12000 s⁻¹ das zu messende Medium geprüft. Speziell ergibt sich aus den oben genannten Angaben eine Schergeschwindigkeit von 9000 s⁻¹. Das Geschwindigkeitsgefälle muss gleich sein, wenn die Viskositäten von Beschichtungsstoffen verglichen werden. Falls nicht anders vereinbart, muss die Bestimmung insbesondere bei (23 ± 0,2)°C durchgeführt werden. Der erhaltene Wert gibt Auskunft über den Widerstand des Stoffes, insbesondere des Trennmittels, beim Auftragen durch Streichen, Spritzen und Rollen.

Die von dem Trennmittel kontaktierte Oberfläche des mineralischen Formkörpers nach dem zumindest teilweisen Erstarren und/oder Erhärten des mineralischen Formkörpers, ist bevorzugt derart gestaltet, dass die Fläche von Lunkern, bezogen auf die Gesamtfläche weniger als 5 %, bevorzugt weniger als 3 %, besonders bevorzugt weniger als 1,5 %, beträgt.

Ein mineralischer Formkörper wird als zumindest teilweise erstarrt gewertet, wenn er zumindest 50 % seiner Normfestigkeit erreicht hat. Vorzugsweise erstarrt ein mineralischer Formkörper, beispielsweise auf Basis von Zementleim, über eine Dauer von zwölf Stunden. Ein mineralischer Formkörper ist vorzugsweise zumindest teilweise erhärtet, wenn er 95 % seiner Normfestigkeit erreicht hat. Die Aushärtung von Beton erfolgt über mehrere Tage. In der Phase des Aushärtens findet beispielsweise in Beton oder Mörtel eine Umwandlung von Zementleim zu Zementstein statt. Bei normalen Temperatur- und Feuchtigkeitsbedingungen erreicht Zement vorzugsweise nach 28 Tagen die Normfestigkeit.

Unter Lunkern werden Löcher, Lufteinschlüsse und/oder Fehlstellen in der Oberfläche des mineralischen Formkörpers verstanden, bevorzugt bei senkrechter Betrachtung auf die von der Formkörperoberfläche gebildeten Ebene. Lunker können beispielsweise dadurch entstehen, dass das Trennmittel zu dick aufgetragen wird oder dass das Trennmittel in den Formkörper eindringt.

Eine angestrebte Formkörperoberfläche zeichnet sich dadurch aus, dass eine möglichst geringe Anzahl an Lunkern und/oder möglichst kleine Lunker vorhanden sind. Die Anzahl und Größe der Lunker kann als ein Qualitätsindikator für die Formkörperoberfläche betrachtet und analysiert werden.

Die Bestimmung der vorstehenden Fläche an Lunkern wird wie folgt durchgeführt. Es wird ein Formelement, bevorzugt eine Schalung, in Form eines Kunststoffwürfels mit einer Kantenlänge von 150 mm bereitgestellt. Auf den Oberflächen des Formelements, bevorzugt auf den Oberflächen der Schalung, wird das Trennmittel mit einer Sprühpistole und einem Auftragsgewicht von 150 g/m² angeordnet und anschließend getrocknet.

Als mineralische Baustoff-Mischung werden 1935 g Kies (Fraktion: 2 mm bis 8 mm), 2565 g Sand (Fraktion: 0 mm bis 2 mm) und 900 g CEM II/A-LL 42,5 N (Portlandkalksteinzement) miteinander vermengt und diese Mischung mit 450 g Wasser zu einem homogenen Betongemisch verrührt.

Der Beton wird anschließend in das Formelement, bevorzugt in die Schalung, gefüllt. Die Füllhöhe beträgt bevorzugt zumindest 9 cm. Zur Analyse werden die Seitenteile, d. h., die vertikalen Flächen des mineralischen Formkörpers, jedoch nicht die Bodenseite, d. h., die horizontale Fläche, des mineralischen Formkörpers herangezogen.

Um die Größe und Anzahl der Lunker zu ermitteln wird das Bildverarbeitungsprogramm Fiji (Version ImageJ 1.53c) verwendet. In einem ersten Schritt wird ein Bild der zu analysierenden Fläche aufgenommen. Vorzugsweise beträgt die fotografierte Fläche zumindest 15 cm x 9 cm. Anschließend wird aus der fotografierten Fläche eine innere Teilfläche erstellt, indem zumindest an jeder Kante der fotografierten Fläche jeweils von der Kante ausgehend zumindest 2 cm entfernt werden. Hierdurch werden Randeffekte, wie beispielsweise Abplatzungen oder am Rand gelegene Lunker, von der Analyse ausgeschlossen. Die innere Teilfläche beträgt bevorzugt zumindest 7 cm x 7 cm.

In dem Bildverarbeitungsprogramm wird aus der inneren Teilfläche zuerst ein binäres Farbbild erstellt. Anschließend werden die Farbwerte des Bildes so eingestellt, dass die geschlossene Fläche, d. h., die lunkerfreie Fläche, einfarbig ist und die Lunker farblos dargestellt werden. Durch das Bildverarbeitungsprogramm werden anschließend Flächenanteile der farblosen Anteile, also die Gesamtfläche aller Lunker, ermittelt. Die Fläche der Lunker wird auf die Gesamtfläche, bevorzugt auf die innere Teilfläche, bezogen und wird in Prozent angegeben.

Das Trennmittel weist insbesondere keine polychlorierten Biphenyle auf. Das Trennmittel weist kein Dispersionsadditiv und/oder Emulsionsadditiv auf, und/oder wird ohne diese bereitgestellt. Es ist möglich, dass das Polymer eine emulgierende Wirkung aufweist.

Das Trennmittel weist keine raffinierten Öle und/oder Fette, biogene Öle und/oder Fette auf und/oder wird ohne diese bereitgestellt. Die carbonsäurehaltige Monomer-Komponente und optional die nicht-carbonsäurehaltige Monomer-Komponente von Schritt a), sowie das Polymer in Schritt b) erhaltene Polymer werden nicht als raffinierte Öle und/oder Fette, biogene Öle und/oder Fette verstanden.

Selbstverständlich können auch obig angeführte Sachmerkmale äquivalent in einem Verfahren oder angeführte Verfahrensmerkmale in einem Produkt angewendet werden.

Im Folgenden wird die Erfindung anhand von mehreren Ausführungsbeispielen unter Zuhilfenahme der beiliegenden Zeichnungen beispielhaft erläutert. Die gezeigten Ausführungsbeispiele sind daher nicht einschränkend zu verstehen.
- Fig. 1: zeigt schematisch das Verfahren zur Herstellung eines Trennmittels
- Fig. 2: zeigt eine schematische Darstellung der Anwendung des Trennmittels.

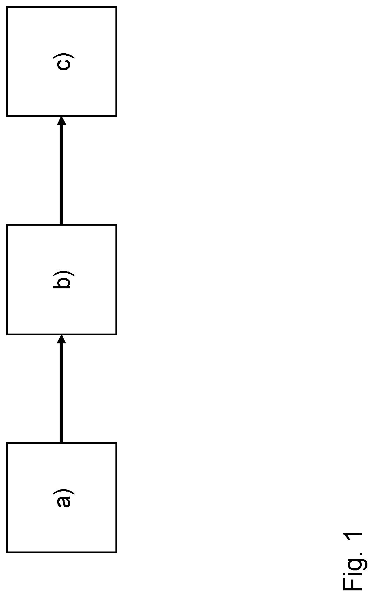

Fig. 1 zeigt schematisch ein Verfahren zur Herstellung des erfindungsgemäßen Trennmittels 2. Das Verfahren weist zumindest die folgenden Schritte a), b) und c) auf.

In Schritt a) von Fig. 1 wird die reaktive Mischung bereitgestellt, die eine carbonsäurehaltige Monomer-Komponente aufweist, wobei diese carbonsäurehaltige Monomer-Komponente Itaconsäure und/oder Itaconsäurederivate umfasst und/oder daraus besteht. Schritt a) wird zu Beginn des Verfahrens durchgeführt. Die Zusammensetzung der Bestandteile der reaktiven Mischung ist derart gewählt, dass die Summe der Bestandteile 100 Gew.-% (Gew.-% = Gewichtsprozent) bezogen auf das Gesamtgewicht der reaktiven Masse ergeben.

Vorzugsweise weist die carbonsäurehaltige Monomer-Komponente der reaktiven Mischung nach Fig. 1 neben Itaconsäure und/oder Itaconsäurederivaten zumindest eine weitere carbonsäurehaltige Monomer-Komponente auf und/oder wird damit bereitgestellt, die aus der Gruppe einzeln oder in Kombination ausgewählt ist, die aus Acrylsäure, Methacrylsäure, und Maleinsäure, besteht.

Erfindungsgemäße Derivate der Itaconsäure der carbonsäurehaltigen Monomer-Komponente sind das Anhydrid der Itaconsäure, der Methoxyester der Itaconsäure und/oder Ethoxyester der Itaconsäure. Erfindungsgemäß ist das Itaconsäurederivat der carbonsäurehaltigen Monomer-Komponente maximal an einer Carbonsäure derivatisiert und liegt beispielsweise als Itaconsäuremonoester vor.

Es ist möglich, dass der Anteil an Monomer der carbonsäurehaltigen Monomer-Komponente, bezogen auf die Gesamtmasse der reaktiven Mischung, aus einem Bereich von 10 Gew.-% bis 60 Gew.-%, bevorzugt von 20 Gew.-% bis 50 Gew.-%, weiter bevorzugt von 30 Gew.-% bis 40 Gew.-%, ausgewählt ist und/oder wird.

Es ist möglich, dass die reaktive Mischung nach dem Verfahren von Fig. 1 zumindest eine nicht-carbonsäurehaltige Monomer-Komponente aufweist oder mit dieser bereitgestellt wird, die einzeln oder in Kombination aus der Gruppe ausgewählt ist, die aus Acrylamid und dessen Derivate, Estern der Acrylsäure, Estern der Methacrylsäure, Estern der Itaconsäure, Estern der Maleinsäure, Maleinsäureanhydrid, Terpenen, bevorzugt Myrcen, Styrol, Isopren, Butadien, Vinylether und/oder Kombinationen davon, besteht. Bevorzugt ist die nicht-carbonsäurehaltige Monomer-Komponente ausgewählt aus der Gruppe, die aus Acrylamid und dessen Derivate, Estern der Acrylsäure, Ester der Methacrylsäure, Estern der Itaconsäure, Terpenen oder Kombinationen davon, besteht. Weiter bevorzugt ist die nicht-carbonsäurehaltige Monomer-Komponente ausgewählt aus der Gruppe, die aus Acrylamid und dessen Derivate, Estern der Itaconsäure, Terpenen oder Kombinationen davon, besteht.

Vorzugsweise ist und/oder wird der Anteil an Monomer der nicht-carbonsäurehaltigen Monomer-Komponente bezogen auf die Gesamtmasse der reaktiven Mischung ausgewählt aus einem Bereich von mehr als 0 Gew.-% bis 30 Gew.-%, bevorzugt von mehr als 0 Gew.-% bis 20 Gew.-%, weiter bevorzugt von mehr als 0 Gew.-% bis 15 Gew.-%.

Es ist möglich, dass die nicht-carbonsäurehaltige Monomer-Komponente zumindest zu 80 Gew.-%, bevorzugt zu 100 Gew.-%, wasserlösliche Monomere umfasst.

Es ist möglich, dass die carbonsäurehaltige Monomer-Komponente und/oder die nicht-carbonsäurehaltige Monomer-Komponente und/oder das Polymer und/oder das Trennmittel 2 biogene Bestandteile umfassen und/oder daraus bestehen, und/oder mit diesen bereitgestellt werden.

Vorzugsweise sind die carbonsäurehaltige Monomer-Komponente und/oder die nicht-carbonsäurehaltige Monomer-Komponente und/oder das Polymer und/oder das Trennmittel 2 biologisch abbaubar. Die carbonsäurehaltige Monomer-Komponente und/oder die nicht-carbonsäurehaltige Monomer-Komponente und/oder das Polymer und/oder das Trennmittel 2 können kompostierbar sein.

Es ist möglich, dass die reaktive Mischung nach dem Verfahren von Fig. 1 ein Lösemittel, bevorzugt ein organisches Lösemittel, aufweist oder mit diesem bereitgestellt wird, das einzeln oder als Mischungen ausgewählt ist, aus der Gruppe, die aus Ethanol, 1-Propanol, 2-Propanol, Aceton, 2-Butanon (MEK), Acetat, insbesondere Ethylacetat und Lactylacetat, besteht. Das organische Lösemittel ist bei Normklima mit Wasser mischbar, bevorzugt in einem 1:1 Verhältnis mit Wasser mischbar.

Alternativ oder zusätzlich ist es möglich, dass die reaktive Mischung ein Lösemittel aufweist und/oder mit diesem bereitgestellt wird, dass Wasser umfasst, und/oder daraus besteht. Bevorzugt ist das Lösemittel der reaktiven Mischung Wasser.

Es ist möglich, dass die reaktive Mischung einen pH-Wert aufweist, der ausgewählt ist aus einem Bereich von 3 bis 14, bevorzugt von 5 bis 12, weiter bevorzugt von 6 bis 9, und/oder mit diesem bereitgestellt wird. Es ist möglich, dass die reaktive Mischung gelöste Hydroxide der Alkalimetallen der 1. Hauptgruppe des Periodensystems umfasst, bevorzugt NaOH und/oder KOH.

Es ist möglich, dass der Anteil des Lösemittels, bezogen auf die Gesamtmasse der reaktiven Mischung, ausgewählt ist und/oder wird aus einem Bereich von 10 Gew.-% bis 90 Gew.-%, bevorzugt von 30 Gew.-% bis 80 Gew.-%, weiter bevorzugt von 40 Gew.-% bis 60 Gew.-%.

Vorzugsweise weist die reaktive Mischung nach dem Verfahren nach Fig. 1 einen Initiator, bevorzugt einen Initiator für eine radikalische Polymerisation, auf und/oder wird mit diesem bereitgestellt.

Es ist möglich, dass der Anteil an Initiator, bezogen auf die Gesamtmasse der reaktiven Mischung, aus einem Bereich von 0,05 Gew.-% bis 2,5 Gew.-%, bevorzugt von 0,1 Gew.-% bis 1,5 Gew.-%, weiter bevorzugt von 0,5 Gew.-% bis 1,2 Gew.-%, ausgewählt ist und/oder wird.

Vorzugsweise ist und/oder wird der Initiator ausgewählt aus der Gruppe, die aus Azoverbindungen, Peroxiden oder Mischungen davon, besteht.

Vorzugsweise weist die reaktive Mischung nach dem Verfahren von Fig. 1 folgende Zusammensetzung auf und/oder wird damit bereitgestellt, wobei die Angaben der einzelnen Bestandteile jeweils bezogen auf die Gesamtmasse der reaktiven Mischung sind und wobei die Bestandteile so ausgewählt werden, dass sie in Summe 100 Gew.-% ergeben:

| | |
|---|---|
| Carbonsäurehaltige Monomer-Komponente: | 10 Gew.-% - 60 Gew.-%, |
| Nicht-carbonsäurehaltige Monomer-Komponente: | 0 Gew.-% - 30 Gew.-%, |
| Lösemittel: | 10 Gew.-% - 90 Gew.-%, |
| Initiator: | 0,05 Gew.-% - 2,5 Gew.-%, |

| | |
|---|---|
| Weiter bevorzugt: | |
| Carbonsäurehaltige Monomer-Komponente: | 20 Gew.-% - 50 Gew.-%, |
| Nicht-carbonsäurehaltige Monomer-Komponente: | 0 Gew.-% - 20 Gew.-%, |
| Lösemittel: | 30 Gew.-% - 80 Gew.-%, |
| Initiator: | 0,1 Gew.-% - 1,5 Gew.-%, |

| | |
|---|---|
| Noch weiter bevorzugt: | |
| Carbonsäurehaltige Monomer-Komponente: | 30 Gew.-% - 40 Gew.-%, |
| Nicht-carbonsäurehaltige Monomer-Komponente: | 0 Gew.-% - 15 Gew.-%, |
| Lösemittel: | 40 Gew.-% - 60 Gew.-%, |
| Initiator: | 0,5 Gew.-% - 1,2 Gew.-%. |

In Schritt b) nach dem Verfahren nach Fig. 1 wird aus der in Schritt a) bereitgestellten reaktiven Mischung eine Polymerlösung erhalten. Die Polymerlösung umfasst ein Polymer, dass zumindest die carbonsäurehaltige Monomer-Komponente, insbesondere die Monomer-Komponenten der in Schritt a) bereitgestellten reaktiven Mischung, aufweist. Weiter weist die Polymerlösung ein Lösemittel auf. Das Polymer ist zumindest teilweise in dem Lösemittel, bevorzugt in Form von Wasser, gelöst. Es ist möglich, dass das Polymer im Lösemittel, bevorzugt in Form von Wasser, zu zumindest 30 g/l, bevorzugt zu zumindest 60 g/l, bei Normklima im Gleichgewichtszustand im Lösemittel, bevorzugt in Form von Wasser, gelöst vorliegt. Schritt b) wird bevorzugt nach Schritt a) durchgeführt.

Es ist möglich, dass Schritt b) bei einer Temperatur der reaktiven Mischung durchgeführt wird, die ausgewählt ist aus einem Bereich von 20 °C bis 110 °C, bevorzugt von 40 °C und 85 °C, weiter bevorzugt von 50 °C bis 70 °C.

Es ist möglich, dass in Schritt b) nach dem Verfahren nach Fig. 1 das Lösemittel der reaktiven Mischung nach dem das Polymer erhalten wurde, abgetrennt wird, beispielsweise ausgewählt aus der Gruppe, die aus Filtration, Absaugen, Verdampfen, Vakuumtrocknen, Beaufschlagen mit IR-Strahlung, oder Ausgefrieren oder Kombinationen davon, besteht. Weiter ist es dann möglich, dass das Polymer einem weiteren Lösemittel zugeführt wird. Mit anderen Worten ist es möglich, dass das Lösemittel der reaktiven Mischung ein anderes Lösemittel ist im Vergleich zu dem Lösemittel der Polymerlösung.

Zusätzlich ist es möglich, dass in Schritt b) das Polymer mit einem weiteren, bevorzugt organischen Lösemittel, gewaschen wird, welches einen niedrigeren Siedepunkt aufweist, als das Lösemittel, das von der reaktiven Mischung umfasst ist und/oder wird.

Vorzugsweise umfasst das Lösemittel der Polymerlösung Wasser und/oder besteht im Wesentlich daraus. Insbesondere ist das Polymer wasserlöslich.

Es ist möglich, dass das Polymer, insbesondere vor der Decarboxylierung, die carbonsäurehaltige Monomer-Komponente, bevorzugt Itaconsäure und/oder Itaconsäurederivate, weiter bevorzugt Itaconsäure, ausgewählt aus einem Bereich von 25 Gew.-% bis 99,95 Gew.-%, bevorzugt von 40 Gew.-% bis 99,95 Gew.-%, weiter bevorzugt von 55 Gew.-% bis 99,95 Gew.-%, aufweist. Vorzugweise besteht die carbonsäurehaltige Monomer-Komponente aus Itaconsäure und/oder Itaconsäurederivaten, bevorzugt Itaconsäure.

Es ist möglich, dass das Polymer, insbesondere vor der Decarboxylierung, die nicht-carbonsäurehaltige Monomer-Komponente aufweist, insbesondere ausgewählt aus einem Bereich von mehr als 0 Gew.-% bis 75 Gew.-%, bevorzugt von mehr als 0 Gew.-% bis 60 Gew.-%, weiter bevorzugt von mehr als 0 Gew.-% bis 45 Gew.-%.

Insbesondere weist das Polymer, insbesondere vor der Decarboxylierung, den Initiator, ausgewählt aus einem Bereich von 0,05 Gew.-% bis 2 Gew.-%, bevorzugt von 0,1 Gew.-% bis 1,5 Gew.-%, weiter bevorzugt von 0,5 Gew.-% bis 1,1 Gew.-%, auf.

Das Polymer, insbesondere vor der Decarboxylierung, weist bevorzugt einen Wert für das Zahlenmittel der molaren Masse auf, der ausgewählt ist aus einem Bereich von 500 g/mol bis 500.000 g/mol, bevorzugt von 750 g/mol bis 100.000 g/mol, weiter bevorzugt von 1000 g/mol bis 50.000 g/mol, noch weiter bevorzugt von 1500 g/mol bis 20.000 g/mol.

Es ist möglich, dass die carbonsäurehaltige Monomer-Komponente, die das Polymer aufweist, neben Itaconsäure und/oder Itaconsäurederivaten zumindest eine weitere carbonsäurehaltige Monomer-Komponente aufweist, die aus der Gruppe einzeln oder in Kombination ausgewählt ist, die aus Acrylsäure, Methacrylsäure, Maleinsäure, besteht. Der Anteil der carbonsäurehaltigen Monomer-Komponente, insbesondere von Itaconsäure und/oder Itaconsäurederivaten, im Polymer bezogen auf die Gesamtmasse des Polymers ist insbesondere ausgewählt aus dem Bereich von 2,5 Gew.-% bis 100 Gew.-%, bevorzugt von 5 Gew.-% bis 80 Gew.-%, weiter bevorzugt von 10 Gew.-% bis 50 Gew.-%, insbesondere vor der Decarboxylierung.

Bevorzugt weist das Polymer zumindest eine nicht-carbonsäurehaltige Monomer-Komponente auf, deren Komponente oder Derivate einzeln oder in Kombination aus der Gruppe ausgewählt ist, die aus Acrylamid, Estern der Acrylsäure, Estern der Methacrylsäure, Ester der Itaconsäure, Ester der Maleinsäure, Maleinsäureanhydrid, Terpenen, Myrcen, Styrol, Isopren, Butadien, Vinylethern, besteht. Der Anteil der nicht-carbonsäurehaltigen Monomer-Komponente bezogen auf die Gesamtmasse des Polymers ist vorzugweise ausgewählt aus dem Bereich von mehr als 0 Gew.-% bis 97,5 Gew.-%, bevorzugt von 5 Gew.-% bis 90 Gew.-%, weiter bevorzugt von 15 Gew.-% bis 85 Gew.-%, insbesondere vor der Decarboxylierung.

Das Polymer, insbesondere vor der Decarboxylierung, kann einen Wert für die Glasübergangstemperatur aufweisen, der ausgewählt aus einem Bereich von - 20 °C bis 110 °C, bevorzugt von -20 °C bis 50 °C, weiter bevorzugt von -10 °C bis 25 °C, ist.

In Schritt c) nach dem Verfahren nach Fig. 1 wird ein Trennmittel 2 erhalten. Das Trennmittel 2 umfasst die Polymerlösung, die das in Schritt b) erhaltene Polymer aufweist. Das Trennmittel 2, bevorzugt das Polymer, liegt vorzugsweise vor seiner Verwendung, also dem Anordnen als Schicht auf zumindest einer Oberfläche eines Formelements 1, bevorzugt auf zumindest einer Oberfläche einer Schalung, in einem Zustand vor, in dem noch keine Decarboxylierung erfolgte und ist zumindest teilweise decarboxylierbar. Insbesondere wird CO₂ aus dem Polymer des Trennmittels 2 während oder nach der Verwendung des Trennmittels 2 freigesetzt. Durch die Decarboxylierung wird das CO₂ vom Polymer abgespalten und freigesetzt. Die Menge des freigesetzten Polymers ist abhängig von der Polymerstruktur. Es ist möglich, dass aus der carbonsäurehaltige Monomer-Komponente, bevorzugt Itaconsäure und/oder Itaconsäurederivat, zumindest teilweise, durch Decarboxylierung CO₂ freigesetzt wird.

Bevorzugt setzt das Trennmittel 2, das CO₂ nach und/oder während einem Kontaktieren mit einer mineralischen Baustoff-Mischung 3 frei. Weiter bevorzugt setzt das Trennmittel 2 das CO₂ während einem zumindest teilweisen Erstarren und/oder Erhärten der kontaktierten mineralischen Baustoff-Mischung 3 frei. Die Baustoff-Mischung 3 ist insbesondere fließfähig oder plastisch verformbar. Weiter weist die Baustoff-Mischung 3 Wasser und wenigstens ein mineralisches Bindemittel auf. Alternativ oder zusätzlich ist es auch möglich, dass das Trennmittel 2, bevorzugt Polymer, das CO₂ nach einem Anordnen auf zumindest einer Oberfläche eines Formelements 1, vorzugsweise einer Schalung, freisetzt und/oder decarboxyliert, bevorzugt bevor es mit der mineralischen Baustoff-Mischung 3 kontaktiert wird.

Das Trennmittel 2 kann in Form einer Schicht unabhängig von einem Feuchtegehalt des Trennmittels 2 als Trennmittel 2 wirken. Mit anderen Worten kann die Decarboxylierung des Trennmittels 2, bevorzugt Polymers, unabhängig vom Feuchtegehalt des Trennmittels 2 erfolgen und/oder das CO₂ ist aus dem Trennmittel 2, bevorzugt Polymer, unabhängig vom Feuchtegehalt freisetzbar. Hierdurch kann das Trennmittel 2 im trockenen Zustand wie auch im feuchten Zustand wirken.

Das Trennmittel 2 weist einen Indikator auf oder wird damit bereitgestellt, wodurch das Trennmittel 2 im trockenen Zustand einen anderen Farbeindruck aufweist im Vergleich zum feuchten Zustand. Das Trennmittel 2 weist somit vor der Verwendung, umfassend die Polymerlösung einen anderen Farbeindruck im Vergleich zu einer trockenen Schicht auf.

Beispielsweise ist es möglich, dass der Indikator, im feuchten Zustand des Trennmittels 2 einen Farbeindruck aufweist und der Indikator im trockenen Zustand des Trennmittels 2 farblos ist. Im trockenen Zustand ist der Indikator somit für einen Betrachter vorzugsweise nicht erkennbar.

Ein geeigneter Indikator ist bevorzugt aus einem oder mehreren Leukofarbstoffen ausgewählt.

Es ist möglich, dass der Trennmittel 2 ein Verlaufsadditiv umfasst und/oder damit bereitgestellt wird, bevorzugt ausgewählt aus einem Bereich von mehr als 0 Gew.-% bis 10 Gew.-%, weiter bevorzugt von mehr als 0 Gew.-% bis 7,5 Gew.-%, noch weiter bevorzugt von mehr als 0 Gew.-% bis 5,5 Gew.-%, jeweils bezogen auf das Gesamtgewicht des Trennmittels 2.

Unter dem Gesamtgewicht des Trennmittels 2 wird der feuchte Zustand und/oder das Gesamtgewicht des Trennmittels 2 verstanden mit dem das Trennmittel in Schritt c) erhalten wird und vor dessen Verwendung.

Es ist auch möglich, dass das Trennmittel 2 einen Verdicker umfasst und/oder damit bereitgestellt wird, bevorzugt ausgewählt aus einem Bereich von mehr als 0 Gew.-% bis 2 Gew.-%, weiter bevorzugt von mehr als 0 Gew.-% bis 1,5 Gew.-%, noch weiter bevorzugt von mehr als 0 Gew.-% bis 1,2 Gew.-%, jeweils bezogen auf das Gesamtgewicht des Trennmittels 2.

Das Trennmittel 2 von Schritt c) weist die Polymerlösung von Schritt b) auf. Vorzugsweise umfasst das Trennmittel 2 die Polymerlösung ausgewählt aus einem Bereich von 0,01 Gew.-% bis 100 Gew.-%, bevorzugt von 0,01 Gew.-% bis 50 Gew.-%, weiter bevorzugt von 0,01 Gew.-% bis 20 Gew.-% und/oder wird derart bereitgestellt, jeweils bezogen auf das Gesamtgewicht des Trennmittels 2.

Das Trennmittel 2 von Schritt c) weist insbesondere die Polymerlösung von Schritt b) auf. Vorzugsweise umfasst bei einer bevorzugten Ausführungsform die Polymerlösung das Polymer ausgewählt aus einem Bereich von 0,005 Gew.-% bis 50 Gew.-%, bevorzugt von 0,005 Gew.-% bis 25 Gew.-%, weiter bevorzugt von 0,005 Gew.-% bis 10 Gew.-% und/oder wird derart bereitgestellt, jeweils bezogen auf das Gesamtgewicht des Trennmittels 2.

Vorzugsweise umfasst das Lösemittel das Trennmittel 2 Wasser und/oder besteht im Wesentlich daraus.

Vorzugsweise weist das Trennmittel 2 nach dem Verfahren nach Fig. 1 Lösemittel, bevorzugt in Form von Wasser, ausgewählt aus einem Bereich von mehr als 0 Gew.-% bis 99,99 Gew.-%, bevorzugt von 50 Gew.-% bis 99,99 Gew.-%, weiter bevorzugt von 80 Gew.-% bis 99,99 Gew.-%, auf und/oder wird damit bereitgestellt, jeweils bezogen auf das Gesamtgewicht des Trennmittels 2.

Vorzugsweise weist ein erfindungsgemäßes Trennmittel 2 folgende Zusammensetzung auf und/oder wird damit bereitgestellt, wobei die Angaben der einzelnen Bestandteile jeweils bezogen auf das Gesamtgewicht des Trennmittels 2 sind und/oder mit dem es bereitgestellt wird, und wobei die Bestandteile so ausgewählt werden, dass sie in Summe 100 Gew.-% ergeben:

| | |
|---|---|
| Polymerlösung: | 0,01 Gew.-% - 100 Gew.-%, |
| Lösemittel: | 0 Gew.-% - 99,99 Gew.-%, |
| Verlaufsadditiv: | 0 Gew.-% - 10 Gew.-%, |
| Verdicker: | 0 Gew.-% - 2 Gew.-%, |

| | |
|---|---|
| Weiter bevorzugt: | |
| Polymerlösung: | 0,01 Gew.-% - 50 Gew.-%, |
| Lösemittel: | 50 Gew.-% - 99,99 Gew.-%, |
| Verlaufsadditiv: | 0 Gew.-% - 7,5 Gew.-%, |
| Verdicker: | 0 Gew.-% - 1,5 Gew.-%, |

| | |
|---|---|
| Noch weiter bevorzugt: | |
| Polymerlösung: | 0,01 Gew.-% - 20 Gew.-%, |
| Lösemittel: | 80 Gew.-% - 99,99 Gew.-%, |
| Verlaufsadditiv: | 0 Gew.-% - 5,5 Gew.-%, |
| Verdicker: | 0 Gew.-% - 1,2 Gew.-%. |

Die dynamische Viskosität ist und/oder wird bevorzugt ausgewählt aus einem Bereich von 1 mPas bis 300 Pas, bevorzugt von 2 mPas bis 200 mPas, weiter bevorzugt von 3 mPas bis 150 mPas, noch weiter bevorzugt von 3 mPas bis 100 mPas.

Insbesondere beim Anordnen auf einer vertikalen Oberfläche weist das Trennmittel 2 eine dynamische Viskosität auf, die aus einem Bereich von 50 mPas bis 300 mPas, bevorzugt von 75 mPas bis 200 mPas, weiter bevorzugt von 100 mPas bis 150 mPas, ausgewählt ist.

Insbesondere beim Aufbringen auf einer horizontalen Oberfläche weist das Trennmittel 2 eine dynamische Viskosität auf, die aus einem Bereich von 1 mPas bis 300 mPas, bevorzugt von 2 mPas bis 200 mPas, weiter bevorzugt von 3 mPas bis 100 mPas, ausgewählt ist.

Die dynamische Viskosität wird jeweils nach der in DIN EN ISO 2884-1:2006-09 (Ausgabedatum: 2006-09, "Beschichtungsstoffe - Bestimmung der Viskosität mit Rotationsviskosimetern - Teil 1: Kegel-Platte-Viskosimeter bei hohem Geschwindigkeitsgefälle (ISO 2884-1:1999); Deutsche Fassung EN ISO 2884-1:2006") beschriebenen Methode der Viskositätsbestimmung mittels Rotationsviskosimeter, insbesondere unter Verwendung eines Kegelplattenviskosimeter der Fa. Thermo Scientific, Modell Haake Mars 60 mit einer Kegel-Platte Messgeometrie, bestimmt.

Die von dem Trennmittel 2 kontaktierte Oberfläche des mineralischen Formkörpers 4 nach dem zumindest teilweisen Erstarren und/oder Erhärten des mineralischen Formkörpers 4, ist bevorzugt derart gestaltet, dass die Fläche von Lunkern, bezogen auf die Gesamtfläche weniger als 5 %, bevorzugt weniger als 3 %, besonders bevorzugt weniger als 1,5 %, beträgt.

Das Trennmittel 2 weist insbesondere keine polychlorierten Biphenyle auf. Das Trennmittel 2 weist kein Dispersionsadditiv und/oder Emulsionsadditiv auf, und/oder wird ohne diese bereitgestellt. Es ist möglich, dass das Polymer eine emulgierende Wirkung aufweist.

Das Trennmittel 2 weist keine raffinierten Öle und/oder Fette, biogene Öle und/oder Fette auf und/oder wird ohne diese bereitgestellt. Die carbonsäurehaltige Monomer-Komponente und optional die nicht-carbonsäurehaltige Monomer-Komponente von Schritt a), sowie das Polymer in Schritt b) erhaltene Polymer werden nicht als raffinierte Öle und/oder Fette, biogene Öle und/oder Fette verstanden.

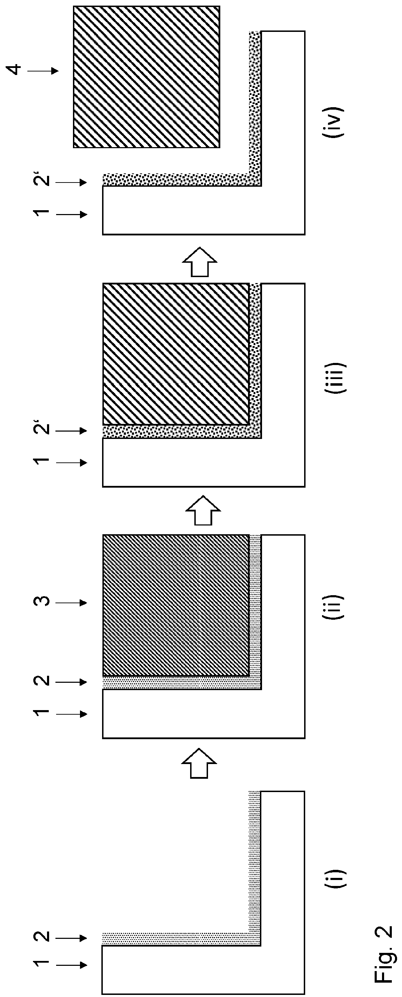

Fig. 2 zeigt eine schematische Darstellung der Verwendung des erfindungsgemäßen Trennmittels 2 bzw. des Trennmittels 2, der nach Anspruch 1 hergestellt wird, in einem Verfahren mittels dessen ein mineralischer Formkörper 4 erhalten wird.

In Schritt i) wird wenigstens ein Formelement 1, bevorzugt eine Schalung bereitgestellt. Auf zumindest einer Oberfläche des Formelements 1, bevorzugt der Schalung, ist das erfindungsgemäße Trennmittel 2 oder der nach dem erfindungsgemäßen Verfahren in Schritt c) erhaltene Trennmittel 2 in Form einer Schicht angeordnet.

Das Trennmittel 2 wird bevorzugt auf der zumindest einen Oberfläche des Formelements 1, bevorzugt auf der zumindest einen Oberfläche der Schalung, durch ein Verfahren, das ausgewählt ist aus der Gruppe, die aus Sprühverfahren, Pinselverfahren oder Rollenverfahren oder Kombinationen davon, besteht, angeordnet. Vorzugsweise wird das Trennmittel 2 vollflächig auf der zumindest einen Oberfläche des Formelements 1, bevorzugt auf der zumindest einen Oberfläche der Schalung, angeordnet. Bevorzugt wird das Trennmittel 2 auf allen Oberflächen des Formelements 1, bevorzugt auf der zumindest einen Oberfläche der Schalung, die mit der mineralischen Baustoff-Mischung 3 kontaktiert werden, vollflächig angeordnet.

Vorzugsweist wird die Auftragsmenge des Trennmittels 2 ausgewählt aus einem Bereich von 50 g/m² bis 400 g/m², bevorzugt von 100 g/m² bis 250 g/m², weiter bevorzugt von 125 g/m² bis 175 g/m², bezogen auf eine nicht-saugende Schalung.

Anschließend wird in Schritt ii) eine insbesondere fließfähige oder plastisch verformbare mineralischen Baustoff-Mischung 3, die Wasser und wenigstens ein mineralisches Bindemittel umfasst, auf der zumindest einen mit dem Trennmittel 2 beschichteten Oberfläche des Formelements 1, vorzugsweise der Schalung, angeordnet.

Die mineralische Baustoff-Mischung 3 umfasst bevorzugt Beton, Mörtel, Kalksandstein, Silikat-Keramik oder eine Kombination davon, oder daraus besteht. Vorzugsweise umfasst das wenigstens eine mineralische Bindemittel ein hydraulisches Bindemittel, ein nicht-hydraulisches Bindemittel oder eine Mischung davon. Weiter ist es möglich, dass das wenigstens eine mineralische Bindemittel aus der Gruppe ausgewählt wird, die aus Calciumsilikathydraten, Zement, Kalk, Ton, Gips, Lehm, Magnesiabinder und Kombinationen davon besteht.

In Schritt iii) nach Fig. 2 erstarrt die mineralischen Baustoff-Mischung 3 zumindest teilweise und es wird ein formstabiler, mineralischer Grünkörper erhalten. Weiter erhärtet die mineralische Baustoff-Mischung 3, bevorzugt der formstabile, mineralische Grünkörper.

In Schritt iv) ist gezeigt, dass das Formelement 1, bevorzugt die Schalung, von der mineralischen Baustoff-Mischung 3 entfernt wird. Es wird ein mineralischer Formkörper 4 erhalten.

Bevorzugt spaltet das Trennmittel 2 nach Schritt i), in Schritt ii) und/oder in Schritt iii) CO₂ aus der Polymerstruktur ab. Mit anderen Worten setzt das Trennmittel 2 das CO₂ nach und/oder während einem Kontaktieren mit einer mineralischen Baustoff-Mischung 3 frei. Weiter bevorzugt setzt das Trennmittel 2 das CO₂ während einem zumindest teilweisen Erstarren und/oder Erhärten der kontaktierten mineralischen Baustoff-Mischung 3 frei.

Die Decarboxylierung des Trennmittels 2, insbesondere der porösen Struktur, wird bevorzugt durch das Kontaktieren des Trennmittels 2 mit einer fließfähigen oder plastisch verformbaren mineralischen Baustoff-Mischung 3 initiiert.

Alternativ oder zusätzlich kann das Trennmittel 2 mit einem Flüssigkeitsvolumen kontaktiert, bevorzugt besprüht und/oder übergossen, werden, das die vorstehenden Anionen und/oder Kationen aufweist und alkalisch ist.

Insbesondere umfasst die fließfähige oder plastisch verformbare Baustoff-Mischung 3 zumindest einen Bestandteil, der die Decarboxylierung katalysiert. Vorzugsweise wird die Decarboxylierung ionisch, insbesondere alkalisch, katalysiert. Es ist möglich, dass die Decarboxylierung thermisch katalysiert wird.

Vorzugsweise weist die fließfähige oder plastisch verformbare Baustoff-Mischung 3 zweiwertige oder mehrwertige Kationen zumindest eines Metalls auf, wobei das zumindest eine Metall vorzugsweise ausgewählt ist aus der Gruppe, die aus Mg, Ca, Sr, Ba, Al, Fe, Co, oder Mischungen davon, besteht. Bevorzugt liegen die Kationen in Form von wasserlöslichen Salzen vor.

Vorzugsweise können zwei oder mehrwertige Kationen die Decarboxylierung der Polyitaconsäure katalysieren.

Es ist möglich, dass, insbesondere als eine erste mögliche Wirkweise des freigesetzten CO₂, durch das CO₂ an der Kontaktstelle der mineralischen Baustoff-Mischung 3 und der Oberfläche des Formelements 1, bevorzugt der Schalung, auf der das Trennmittel 2 angeordnet ist, eine poröse Matrix eines mineralischen Formkörpers 4 erzeugt wird.

Zusätzlich ist es möglich, dass durch die Decarboxylierung des Polymers die Kettenlänge und/oder Polymermasse des Polymers reduziert wird. Hierdurch ist es möglich, dass insbesondere die wasserlöslichen Anteile des Polymers in die mineralische Baustoff-Mischung 3 diffundieren. Vorzugweise können die wasserlöslichen Anteile des Polymers die Erzeugung der porösen Matrix im mineralischen Formkörpers fördern.

Die erhaltene poröse Matrix des mineralischen Formkörpers 4 weist im Vergleich zu der Normfestigkeit der mineralischen Baustoff-Mischung 3 eine geringere Festigkeit auf. Somit wird die Haftkraft zwischen Schalung und Beton herabgesetzt, so dass der mineralische Formkörper 4 sich leicht entschalen lässt.

Alternativ oder zusätzlich ist es möglich, insbesondere als eine zweite Wirkweise des CO₂, dass CO₂ an der Oberfläche der mineralischen Baustoff-Mischung 3 zu Kohlensäure reagiert und wie oben, beispielsweise in den Gleichungen (2) bis (5) eine Carbonatisierung stattfindet. Hierdurch ist es möglich, dass das Porenvolumen der mineralischen Baustoff-Mischung 3 reduziert wird und eine Grenzfläche zwischen Oberfläche des Formelements 1, bevorzugt Schalung, erhalten wird, die im Vergleich zur mineralischen Baustoff-Mischung 3 vor der Carbonatisierung und eine gleichmäßigere und/oder glattere Oberfläche aufweist. Vorzugsweise kann die Kontaktfläche zwischen der mineralischen Baustoff-Mischung 3 und der Oberfläche des Formelements 1, bevorzugt der Schalung, reduziert werden, was die Trennung des Formelements 1, bevorzugt Schalung, von dem mineralischen Formkörper 4 verbessert.

Es ist möglich, dass alle der beschriebenen Wirkweisen bei der Herstellung eines mineralischen Formkörpers 4 vorliegen und/oder dass eine der Wirkweisen bevorzugt vorliegt. Dabei hinterlässt das Trennmittel 2 bevorzugt keine Rückstände auf der Oberfläche des Formelements 1, bevorzugt auf der Oberfläche der Schalung. Sollten Rückstände verbleiben, so können diese mit Wasser und einem gewöhnlichen Lappen mechanisch entfernt werden.

Beispielsweise ist es möglich, dass die poröse Matrix auf der dem Formelement 1, bevorzugt Schalung, zugewandten Seite der glatteren Grenzfläche erhalten wird, wodurch eine besonders gute Trennwirkung erreicht wird.

### Beispiel 1

In einem Rundkolben wurden, um eine reaktive Mischung nach Schritt a) zu erhalten, 50 g destilliertes Wasser vorgelegt und 15,8 g Kaliumhydroxid (KOH, Fa. Carl Roth, 85 %) bei Raumtemperatur (20 °C) unter konstantem Rühren gelöst. Es stellte sich ein alkalischer pH-Wert ein. Zu dieser Lösung wurden langsam 36,65 g Itaconsäure (Fa. Thermo Scientific Chemicals, 99+ %) als carbonsäurehaltige Monomer-Komponente hinzugefügt. Durch den alkalischen pH-Wert der Lösung wurde die Löslichkeit der Itaconsäure verbessert. Nach dem vollständigen Lösen der Itaconsäure in der Lösung wurden 13,35 g Acrylamid (Fa. Sigma Aldrich, 99+ %) als eine nicht-carbonsäurehaltige Monomer-Komponente hinzugegeben. Anschließend wurde die Lösung für 5 Minuten mit Argon gespült.

Im Anschluss wird die erhaltene reaktive Mischung unter Rühren von Raumtemperatur auf 50 °C erwärmt und 1,12 g eines Initiators zugegeben (Fa. Fujifilm Wako Chemicals Europe GmbH, Azo-Polymerisationsinitiatiors V-50 (Radikalstarter)). Erhalten wurde die reaktive Mischung nach Schritt a).

Die reaktive Mischung wurde weiter auf 60°C unter weiterem Rühren erwärmt und für 12 Stunden gerührt. Nach einem Abkühlen auf Raumtemperatur wurde eine wässrige Polymerlösung nach Schritt b) erhalten. Die Polymerlösung wies einen Festkörpergehalt von 50 Gew.-% bezogen auf das Trockengewicht der Polymerlösung auf.

Aus der Polymerlösung nach Schritt b) wurde ein Trennmittel 2 nach Schritt c) angerührt. Dabei entsprach die Zusammensetzung des Trennmittels 2 1,84 g Polymerlösung (2 Gew.-%), 0,184 g Verlaufsadditiv (1 Gew.-%, Fa. BYK-Chemie GmbH, Wesel, BYK-Dynwet 800N), 1,38 g Verdicker (7 Gew.-%, Fa. Dow Chemical, Midland, Walocell MW 40000) und 90,16 g destilliertes Wasser (90 Gew.-%). Die Bestandteile des Trennmittels 2 wurden verrührt, bis eine homogene Lösung vorlag.

### Vergleichsbeispiel

Als Vergleichsbeispiel wurde das ölhaltige Trennmittel Master Finish RL 419 (Fa. MasterBuilders Solutions, Staßfurt) bereitgestellt.

### Verwendung der Trennmittel

Um die Wirksamkeit und Eigenschaften des Trennmittels 2 zu beurteilen, wurden mineralische Formkörper 4 erstellt. Hierzu wurde ein Formelement 1, bevorzugt eine Schalung, in Form eines Kunststoffwürfels mit einer Kantenlänge von 150 mm bereitgestellt. Auf den Oberflächen des Formelements 1, bevorzugt auf den Oberflächen der Schalung, wurde das erfindungsgemäße Trennmittel 2 nach Beispiel 1 und das ölhaltige Trennmittel nach dem Vergleichsbeispiel mit einer Sprühpistole (Fa. Einhell, Landau/Isar) und einem Auftragsgewicht von 120 g/m² aufgetragen und anschließend getrocknet.

Als mineralische Baustoff-Mischung 3 wurden 1935 g Kies (Fraktion: 2 mm bis 8 mm), 2565 g Sand (Fraktion: 0 mm bis 2 mm) und 900 g CEM II/A-LL 42,5 N (Portlandkalksteinzement) miteinander vermengt und diese Mischung mit 450 g Wasser zu einem homogenen Betongemisch verrührt.

Der mineralische Baustoff-Mischung 3 bzw. der Beton wurden anschließend in den Kunststoffwürfel gefüllt. Die Füllhöhe betrug zumindest 9 cm. Zur Analyse wurden nur die Seitenteile, d. h., die vertikalen Flächen des Würfels, jedoch nicht die Bodenseite, d. h., die horizontale Fläche, des Würfels herangezogen.

### Ergebnis

Eine angestrebte Formkörperoberfläche zeichnet sich dadurch aus, dass eine möglichst geringe Anzahl an Lunkern und/oder möglichst kleine Lunker vorhanden sind. Die Anzahl und Größe der Lunker kann als ein Qualitätsindikator für die Formkörperoberfläche betrachtet und analysiert werden. Die Ermittlung der Größe und der Anzahl der Lunker wurde wie bereits weiter oben beschrieben durchgeführt.

Die Ergebnisse sind in Tabelle 1 dargestellt. Es zeigt sich, dass bei dem Trennmittel nach Beispiel 1 im Vergleich zum Vergleichsbeispiel eine deutlich kleinere Anzahl an Lunkern (Löchern) erhalten wurde und die Löcher zudem einen deutlich geringeren Durchmesser aufweisen. Weiter ist auch die absolute Fläche der Lunker reduziert. Dies kann gegebenenfalls damit erklärt werden, dass das ölhaltige Trennmittel in den noch nicht erstarten Beton eindringt und es so zu einer vermehrten Lunkerbildung kommt. Weiter ist es möglich, dass ein erfindungsgemäßes Trennmittel 2 durch Carbonatisierung die Größe und/oder Anzahl der Lunker reduziert.

**Tabelle 1: Ergebnisse der Analyse der Lunkerbildung des Trennmittels nach Beispiel 1 und dem Trennmittel nach dem Vergleichsbeispiel**

| Trennmittel | Beispiel 1 | Vergleichsbeispiel |
|---|---|---|
| Fläche Löcher / Pixel | 1144 | 7797 |
| Fläche Löcher / % | 0,311 | 2,024 |
| Fläche Löcher / cm² | 0,375 | 2,553 |
| Gesamtfläche Probe / cm² | 120,53 | 126,15 |
| Anzahl der Löcher / - | 312 | 905 |
| Durchmesser Löcher / Pixel | 3,667 | 8,615 |
| Löcher pro Fläche / 1/cm² | 2,59 | 7,17 |

Die Sauberkeit der Schalungsoberfläche ist ein wichtiger Punkt, da dies aussagt, wie groß der Reinigungsaufwand der Oberfläche des Formelements 1 nach dem Entschalen des mineralischen Formkörpers 4 ist. Um die Sauberkeit der Oberflächen der verwendeten würfelförmigen Formelemente 1 zu erfassen, wurden diese mit einem feuchten Lappen abgewischt. Der Rückstand des Trennmittels 2 nach Beispiel 1 konnte einfach mit dem Lappen entfernt werden, während das Trennmittel des Vergleichsbeispiels auf der Oberfläche des Formelements 1 hinterließ.

Das Absanden, d. h. das Ablösen feiner Partikel von einer mineralischen Formkörperoberfläche auf Grund zu geringer Gefügeverbindung, der Formkörperoberflächen wurde mit einem Klebstreifen (Fa. Tesa) mittels eines Haftungstest überprüft. Beim Haftungstest wird ein Tesafilm 4104 mit 14 mm Breite verwendet, der blasenfrei durch dreimaliges Aufstreichen mit der Daumenkuppe auf die Formkörperoberfläche angedrückt wird. Nach dem Aufstreichen wird der Tesafilm zügig in einem Winkel von 45° bis 60° manuell weg vom Formkörper abgezogen. Der Winkel wird insbesondere zwischen den vom Tesafilm gebildeten Ebenen gemessen. Der Klebstreifen wurde dann wiederrum auf ein weißes Papier appliziert, um den Grad des Absandens optisch zu ermitteln. Es zeigte sich, dass der Klebestreifen, der von der Formkörperoberfläche, die durch das Trennmittel nach Beispiel 1 erhalten wurde, eine geringere Menge an Partikeln optisch wahrnehmbar war, im Vergleich zu der Formkörperoberfläche, die durch das Trennmittel des Vergleichsbeispiels erhalten wurde. Dies ist möglicherweise durch ein Eindringen des ölhaltigen Trennmittels in die mineralische Baustoff-Mischung 3 erklärbar, welches hierbei zu Abbindestörungen und Gefügestörungen führt. Weiter ist es möglich, dass durch ein erfindungsgemäßes Trennmittel 2 eine glattere Grenzfläche, die beispielhaft als eine Art Haut beschrieben werden kann, erhalten wird.

Zusammengefasst ist es möglich durch das erfindungsgemäße Verfahren ein verbessertes Trennmittel 2 bereitzustellen, das einerseits eine verbesserte Umweltverträglichkeit und andererseits eine gute Trennmittelwirkung aufweist.

Selbstverständlich können die aufgeführten Ausführungsvarianten beliebig miteinander kombiniert werden und stellen keine Limitierung dar.

### Bezugszeichenliste

- 1: Formelement
- 2: Trennmittel
- 2': Trennmittel mit decarboxylierten Polymer
- 3: mineralische Baustoff-Mischung
- 4: mineralischer Formkörper

## Patentansprüche

1. Verfahren zur Herstellung eines Trennmittels (2),
**dadurch gekennzeichnet,**
**dass** das Verfahren zumindest die folgenden Schritte umfasst:
a) Bereitstellen einer reaktiven Mischung, umfassend eine carbonsäurehaltige Monomer-Komponente, die Itaconsäure und/oder Itaconsäurederivate umfasst,
wobei das Itaconsäurederivat der carbonsäurehaltigen Monomer-Komponente maximal an einer Carbonsäure derivatisiert ist,
und wobei Derivate der Itaconsäure der carbonsäurehaltigen Monomer-Komponente das Anhydrid der Itaconsäure, der Methoxyester der Itaconsäure und/oder Ethoxyester der Itaconsäure sind,
b) Polymerisation der reaktiven Mischung zu einer Polymerlösung, wobei die Polymerlösung ein in einem Lösemittel zumindest teilweise gelöstes Polymer umfasst, das die carbonsäurehaltige Monomer-Komponente aufweist,
c) Erhalt eines Trennmittels (2) umfassend die Polymerlösung, wobei aus dem Trennmittel (2) durch Decarboxylierung CO₂ freisetzbar ist, wobei das Trennmittel (2) einen Indikator aufweist, wodurch das Trennmittel (2) in einem trockenen Zustand einen anderen Farbeindruck aufweist im Vergleich zu einem feuchten Zustand.

2. Verfahren nach einem der vorstehenden Ansprüche,
**dadurch gekennzeichnet,**
**dass** die Polymerlösung und/oder das Trennmittel (2), insbesondere das Polymer, biogene Bestandteile umfassen und/oder daraus bestehen und/oder biologisch abbaubar und/oder kompostierbar sind, und/oder
**dass** das Trennmittel (2) das CO₂ nach einem Anordnen auf zumindest einer Oberfläche eines Formelements (1), vorzugsweise auf zumindest einer Oberfläche einer Schalung,
und bevorzugt nach einem Kontaktieren mit einer fließfähigen oder plastisch verformbaren mineralischen Baustoff-Mischung (3), die Wasser und wenigstens ein mineralisches Bindemittel umfasst,
und weiter bevorzugt während einem zumindest teilweisen Erstarren und/oder Erhärten der fließfähigen oder plastisch verformbaren mineralischen Baustoff-Mischung (3), ausbildet.

3. Verfahren nach einem der vorstehenden Ansprüche,
**dadurch gekennzeichnet,**
**dass** die carbonsäurehaltige Monomer-Komponente der reaktiven Mischung neben Itaconsäure und/oder Itaconsäurederivaten zumindest eine weitere carbonsäurehaltige Monomer-Komponente aufweist, die aus der Gruppe einzeln oder in Kombination ausgewählt ist, die aus Acrylsäure, Methacrylsäure, Fumarsäure und Maleinsäure, besteht, und/oder
**dass** der Anteil an Monomer der carbonsäurehaltigen Monomer-Komponente, bezogen auf die Gesamtmasse der reaktiven Mischung, aus einem Bereich von 2,5 Gew.-% bis 65 Gew.-%, bevorzugt von 5 Gew.-% bis 50 Gew.-%, weiter bevorzugt von 10 Gew.-% bis 35 Gew.-%, ausgewählt ist.

4. Verfahren nach einem der vorstehenden Ansprüche,
**dadurch gekennzeichnet,**
**dass** die reaktive Mischung zumindest eine nicht-carbonsäurehaltige Monomer-Komponente aufweist, die einzeln oder in Kombination aus der Gruppe ausgewählt ist, die aus Acrylamid, Estern der Acrylsäure, Estern der Methacrylsäure, Estern der Itaconsäure, Estern der Maleinsäure, Maleinsäureanhydrid, Terpenen, bevorzugt Myrcen, Styrol, Isopren, Butadien, Vinylether und/oder Kombinationen davon, besteht, und/oder
**dass** der Anteil an Monomer der nicht-carbonsäurehaltigen Monomer-Komponente bezogen auf die Gesamtmasse der reaktiven Mischung ausgewählt aus einem Bereich von 5 Gew.-% bis 50 Gew.-%, bevorzugt von 10 Gew.-% bis 35 Gew.-%, weiter bevorzugt von 15 Gew.-% bis 30 Gew.-%, ist,
und/oder
**dass** die carbonsäurehaltige Monomer-Komponente und/oder die nicht-carbonsäurehaltige Monomer-Komponente biogene Bestandteile umfassen und/oder daraus bestehen, und/oder biologisch abbaubar sind und/oder kompostierbar sind.

5. Verfahren nach einem der vorstehenden Ansprüche,
**dadurch gekennzeichnet,**
**dass** die reaktive Mischung ein Lösemittel, bevorzugt ein organisches Lösemittel aufweist, das einzeln oder als Mischungen ausgewählt ist, aus der Gruppe, die aus Ethanol, 1-Propanol, 2-Propanol, Aceton, 2-Butanon (MEK), Acetat, insbesondere Ethylacetat und Lactylacetat, besteht, und/oder
**dass** die reaktive Mischung ein Lösemittel aufweist, das Wasser umfasst und/oder daraus besteht,
und/oder
**dass** der Anteil des Lösemittels, bezogen auf die Gesamtmasse der reaktiven Mischung, ausgewählt ist aus einem Bereich von 15 Gew.-% bis 95 Gew.-%, bevorzugt von 30 Gew.-% bis 85 Gew.-%, weiter bevorzugt von 40 Gew.-% bis 70 Gew.-%, noch weiter bevorzugt von 45 Gew.-% bis 55 Gew.-%.

6. Verfahren nach einem der vorstehenden Ansprüche,
**dadurch gekennzeichnet,**
**dass** die reaktive Mischung einen Initiator, bevorzugt einen Initiator für eine radikalische Polymerisation, umfasst,
und/oder
**dass** der Anteil an Initiator, bezogen auf die Gesamtmasse der reaktiven Mischung, aus einem Bereich von 0,05 Gew.-% bis 1,5 Gew.-%, bevorzugt von 0,1 Gew.-% bis 1 Gew.-%, weiter bevorzugt von 0,25 Gew.-% bis 0,5 Gew.-%, ausgewählt ist,
und/oder
**dass** der Initiator aus der Gruppe, die aus Azoverbindungen, Peroxiden oder Mischungen davon, besteht, ausgewählt ist,
und/oder
**dass** Schritt b) bei einer Temperatur der reaktiven Mischung ausgewählt aus einem Bereich von 20 °C bis 110 °C, bevorzugt von 40 °C und 85 °C, weiter bevorzugt von 50 °C bis 70 °C, durchgeführt wird.

7. Verfahren nach einem der vorstehenden Ansprüche,
**dadurch gekennzeichnet,**
**dass** das Lösemittel der Polymerlösung Wasser umfasst und/oder im Wesentlich daraus besteht,
und/oder
**dass** das Polymer wasserlöslich ist, insbesondere wobei mindestens 30 g/l Polymer, bevorzugt mindestens 60 g/l Polymer, bei Normklima in Wasser im Gleichgewichtszustand löslich ist, wobei unter Normklima eine Temperatur von 20 °C und ein Luftdruck von 1 bar verstanden wird.

8. Verfahren nach einem der vorstehenden Ansprüche,
**dadurch gekennzeichnet,**
**dass** das Polymer die carbonsäurehaltige Monomer-Komponente, bevorzugt Itaconsäure und/oder Itaconsäurederivate, weiter bevorzugt Itaconsäure, ausgewählt aus einem Bereich von 25 Gew.-% bis 100 Gew.-%, bevorzugt von 40 Gew.-% bis 100 Gew.-%, weiter bevorzugt von 55 Gew.-% bis 100 Gew.-%, aufweist,
und/oder
**dass** das Polymer die nicht-carbonsäurehaltige Monomer-Komponente, ausgewählt aus einem Bereich von mehr als 0 Gew.-% bis 75 Gew.-%, bevorzugt von mehr als 0 Gew.-% bis 60 Gew.-%, weiter bevorzugt von mehr als 0 Gew.-% bis 45 Gew.-%, aufweist,
und/oder
**dass** das Polymer den Initiator, ausgewählt aus einem Bereich von 0,05 Gew.-% bis 2 Gew.-%, bevorzugt von 0,1 Gew.-% bis 1,5 Gew.-%, weiter bevorzugt von 0,5 Gew.-% bis 1,1 Gew.-%, aufweist.

9. Verfahren nach einem der vorstehenden Ansprüche,
**dadurch gekennzeichnet,**
**dass** das Polymer einen Wert für eine Glasübergangstemperatur aufweist, der ausgewählt aus einem Bereich von -20 °C bis 110 °C, bevorzugt von -20 °C bis 50 °C, weiter bevorzugt von -10 °C bis 25 °C, ist, und/oder
**dass** aus dem Trennmittel (2) unabhängig von dessen Feuchtegehalt CO₂ freisetzbar ist.

10. Verfahren nach einem der vorstehenden Ansprüche,
**dadurch gekennzeichnet,**
**dass** der Indikator im feuchten Zustand des Trennmittels (2) einen Farbeindruck aufweist und der Indikator im trockenen Zustand des Trennmittels (2) farblos ist,
und/oder
**dass** der Indikator aus ein oder mehreren Leukofarbstoffen ausgewählt ist.

11. Verfahren nach einem der vorstehenden Ansprüche,
**dadurch gekennzeichnet,**
**dass** das Trennmittel (2) ein Verlaufsadditiv umfasst, bevorzugt ausgewählt aus einem Bereich von mehr als 0 Gew.-% bis 10 Gew.-%, weiter bevorzugt von mehr als 0 Gew.-% bis 7,5 Gew.-%, noch weiter bevorzugt von mehr als 0 Gew.-% bis 5,5 Gew.-%, jeweils bezogen auf das Gesamtgewicht des Trennmittels (2),
und/oder
**dass** das Trennmittel (2) einen Verdicker umfasst, bevorzugt ausgewählt aus einem Bereich von mehr als 0 Gew.-% bis 2 Gew.-%, weiter bevorzugt von mehr als 0 Gew.-% bis 1,5 Gew.-%, noch weiter bevorzugt von mehr als 0 Gew.-% bis 1,2 Gew.-%, jeweils bezogen auf das Gesamtgewicht des Trennmittels (2),
und/oder
**dass** das Trennmittel (2) die Polymerlösung ausgewählt aus einem Bereich von 0,01 Gew.-% bis 100 Gew.-%, bevorzugt von 0,01 Gew.-% bis 50 Gew.-%, weiter bevorzugt von 0,01 Gew.-% bis 20 Gew.-%, umfasst, jeweils bezogen auf das Gesamtgewicht des Trennmittels (2).

12. Verfahren nach einem der vorstehenden Ansprüche,
**dadurch gekennzeichnet,**
**dass** das Lösemittel des Trennmittels (2) Wasser umfasst und/oder im Wesentlich daraus besteht,
und/oder
**dass** das Trennmittel (2) Lösemittel, bevorzugt in Form von Wasser, ausgewählt aus einem Bereich von mehr als 0 Gew.-% bis 99,99 Gew.-%, bevorzugt von 50 Gew.-% bis 99,99 Gew.-%, weiter bevorzugt von 80 Gew.-% bis 99,99 Gew.-%, umfasst, jeweils bezogen auf das Gesamtgewicht des Trennmittels (2).

13. Verfahren nach einem der vorstehenden Ansprüche,
**dadurch gekennzeichnet,**
**dass** das Trennmittel 2 eine dynamische Viskosität aufweist, die ausgewählt aus einem Bereich von 1 mPas bis 300 Pas, bevorzugt von 2 mPas bis 200 mPas, weiter bevorzugt von 3 mPas bis 150 mPas, noch weiter bevorzugt von 3 mPas bis 100 mPas, ist, bestimmt nach der in DIN EN ISO 2884-1:2006-09 beschriebenen Methode der Viskositätsbestimmung mittels Rotationsviskosimeter,
und/oder
**dass** das Trennmittel (2) kein Dispersionsadditiv und/oder Emulsionsadditiv aufweist und/oder dass das Trennmittel (2) keine polychlorierten Biphenyle aufweist und/oder dass das Trennmittel (2) keine raffinierten Öle und/oder Fette, biogene Öle und/oder Fette aufweist.

14. Trennmittel (2),
**dadurch gekennzeichnet,**
**dass** das Trennmittel (2) ein in einem Lösemittel zumindest teilweise gelöstes Polymer aufweist, wobei das Polymer eine carbonsäurehaltige Monomer-Komponente aufweist, die Itaconsäure und/oder Itaconsäurederivate umfasst,
wobei das Itaconsäurederivat der carbonsäurehaltigen Monomer-Komponente maximal an einer Carbonsäure derivatisiert ist,
wobei Derivate der Itaconsäure der carbonsäurehaltigen Monomer-Komponente das Anhydrid der Itaconsäure, der Methoxyester der Itaconsäure und/oder Ethoxyester der Itaconsäure sind,
wobei aus dem Trennmittel (2) durch Decarboxylierung CO₂ freisetzbar ist,
und wobei das Trennmittel (2) einen Indikator aufweist, wodurch das Trennmittel (2) in einem trockenen Zustand einen anderen Farbeindruck aufweist im Vergleich zu einem feuchten Zustand.

15. Verwendung eines Trennmittels (2) bei der Herstellung von mineralischen Formkörpern (4)
**dadurch gekennzeichnet,**
**dass** das Trennmittel (2) ein in einem Lösemittel zumindest teilweise gelöstes Polymer aufweist, wobei das Polymer eine carbonsäurehaltige Monomer-Komponente aufweist, die Itaconsäure und/oder Itaconsäurederivate umfasst,
wobei das Itaconsäurederivat der carbonsäurehaltigen Monomer-Komponente maximal an einer Carbonsäure derivatisiert ist,
wobei Derivate der Itaconsäure der carbonsäurehaltigen Monomer-Komponente das Anhydrid der Itaconsäure, der Methoxyester der Itaconsäure und/oder Ethoxyester der Itaconsäure sind,
wobei das Trennmittel (2) auf zumindest einer Oberfläche eines Formelements (1) angeordnet wird und mit einer fließfähigen oder plastisch verformbaren mineralischen Baustoff-Mischung (3) kontaktiert wird, wobei die mineralische Baustoff-Mischung (3) Wasser und wenigstens ein mineralisches Bindemittel umfasst, und wobei aus dem Trennmittel (2) durch Decarboxylierung CO₂ freisetzbar ist.

16. Verwendung nach Anspruch 15,
**dadurch gekennzeichnet,**
**dass** die Decarboxylierung des Trennmittels (2) durch das Kontaktieren des Trennmittels (2) mit einer fließfähigen oder plastisch verformbaren mineralischen Baustoff-Mischung (3) initiiert wird, insbesondere dass die fließfähige oder plastisch verformbaren mineralischen Baustoff-Mischung (3) zumindest einen Bestandteil aufweist, der die Decarboxylierung katalysiert,
und/oder
**dass** das Trennmittel (2') die Decarboxylierung ionisch, insbesondere alkalisch, katalysiert wird.

17. Verwendung nach einem der Ansprüche 15 oder 16,
**dadurch gekennzeichnet,**
**dass** die von dem Trennmittel (2) kontaktierte Oberfläche eines mineralischen Formkörpers (4) nach dem zumindest teilweisen Erstarren und/oder Erhärten des mineralischen Formkörpers (4), derart gestaltet ist, dass die Fläche von Löchern und/oder Lunkern, bezogen auf die Gesamtfläche weniger als 5 %, bevorzugt weniger als 3 %, besonders bevorzugt weniger als 1,5 %, beträgt.

## Claims

1. Method for the production of a separating agent (2),
**characterised in that**
the method comprises at least the following steps:
a) providing a reactive mixture, comprising a carboxylic acid-containing monomer component, said monomer component comprising itaconic acid and/or itaconic acid derivatives,
wherein the itaconic acid derivative of the carboxylic acid-containing monomer component is derivatised at most on one carboxylic acid,
and wherein derivatives of the itaconic acid of the carboxylic acid-containing monomer component are itaconic anhydride, itaconic acid methoxyester and/or itaconic acid ethoxyester
b) polymerising the reactive mixture into a polymer solution, wherein the polymer solution comprises a polymer that has been at least partially dissolved in a solvent, said polymer having the carboxylic acid-containing monomer component,
c) obtaining a separating agent (2) comprising the polymer solution, wherein CO₂ is releasable from the separating agent (2) by decarboxylation, wherein the separating agent (2) has an indicator, whereby the separating agent (2) has a different colour impression in a dry state compared with in a moist state.

2. Method according to one of the preceding claims,
**characterised in that**
the polymer solution and/or the separating agent (2), in particular the polymer, comprise biogenic components and/or consist thereof, and/or are biodegradable and/or compostable,
and/or
the separating agent (2) forms CO₂ after arrangement on at least one surface of a shaping element (1), preferably on at least one surface of a formwork,
and preferably after contacting with a flowable or plastically deformable mineral material mixture (3) that comprises water and at least one mineral binding agent,
and further preferably during an at least partial solidification and/or hardening of the flowable or plastically deformable mineral material mixture (3).

3. Method according to one of the preceding claims,
**characterised in that**
the carboxylic acid-containing monomer component of the reactive mixture has, in addition to itaconic acid and/or itaconic acid derivatives, a further carboxylic acid-containing monomer component that is selected, individually or in combination, from the group consisting of acrylic acid, methacrylic acid, fumaric acid and maleic acid, and/or
the proportion of monomer in the carboxylic acid-containing monomer component is selected, relative to the total mass of the reactive mixture, from a range of from 2.5 % b.w. to 65% b.w., preferably from 5% b.w. to 50% b.w., more preferably from 10% b.w. to 35% b.w.

4. Method according to one of the preceding claims,
**characterised in that**
the reactive mixture has at least one non-carboxylic acid-containing monomer component, which is selected individually or in combination from the group consisting of acrylamide, acrylic acid esters, methacrylic acid esters, itaconic acid esters, maleic acid esters, maleic anhydride, terpenes, preferably myrcene, styrene, isoprene, butadiene, vinyl ether and/or combinations thereof,
and/or
the proportion of monomer in the non-carboxylic acid-containing monomer component is selected, relative to the total mass of the reactive mixture, from a range of from 5 % b.w. to 50% b.w., preferably from 10% b.w. to 35% b.w., more preferably from 15% b.w. to 30% b.w.,
and/or
the carboxylic acid-containing monomer component and/or the non-carboxylic acid-containing monomer component comprise biogenic components, or consist thereof, and/or are biodegradable and/or compostable.

5. Method according to one of the preceding claims,
**characterised in that**
the reactive mixture has a solvent, preferably an organic solvent, that is selected individually or as mixtures from the group consisting of ethanol, 1-propanol, 2-propanol, acetone, 2-butanone (MEK), acetate, in particular ethyl acetate and lactyl acetate, and/or
the reactive mixture has a solvent that comprises water and/or consists thereof,
and/or
the proportion of solvent, relative to the total mass of the reactive mixture, is selected from a range of from 15% b.w. to 95% b.w., preferably from 30% b.w. to 85% b.w., more preferably from 40% b.w. to 70% b.w., even more preferably from 45% b.w. to 55% b.w.

6. Method according to one of the preceding claims,
**characterised in that**
the reactive mixture comprises an initiator, preferably an initiator for a radical polymerisation,
and/or
the proportion of initiator, relative to the total mass of the reactive mixture, is selected from a range of from 0.05% b.w. to 1.5% b.w., preferably from 0.1% b.w. to 1% b.w., more preferably from 0.25% b.w. to 0.5% b.w.,
and/or
the initiation is selected from the group consisting of azo compounds, peroxides or mixtures thereof,
and/or
step b) is carried out at a temperature of the reactive mixture that is selected from a range of from 20°C to 110°C, preferably from 40°C to 85°C, more preferably from 50°C to 70°C.

7. Method according to one of the preceding claims,
**characterised in that**
the solvent of the polymer solution comprises water and/or consists substantially thereof,
and/or
the polymer is water-soluble, in particular wherein at least 30g/l polymer, preferably at least 60g/l polymer, is soluble in water in standard atmospheric conditions in a state of equilibrium, wherein standard atmospheric conditions are understood to be a temperature of 20°C and air pressure of 1 bar.

8. Method according to one of the preceding claims,
**characterised in that**
the polymer has the carboxylic acid-containing monomer component, preferably itaconic acid and/or itaconic acid derivatives, more preferably itaconic acid, selected from a range of from 25% b.w. to 100% b.w., preferably from 40% b.w. to 100% b.w., more preferably from 55% b.w. to 100% b.w.,
and/or
the polymer has the non-carboxylic acid-containing monomer component, selected from a range of from more than 0% b.w. to 75% b.w., preferably more than 0% b.w. to 60% b.w., more preferably from more than 0% b.w. to 45% b.w.,
and/or
the polymer has the initiator, selected from a range of from 0.05% b.w. to 2% b.w., preferably from 0.1% b.w. to 1.5% b.w., more preferably from 0.5% b.w. to 1.1% b.w.

9. Method according to one of the preceding claims,
**characterised in that**
the polymer has a value for a glass transition temperature that is selected from a range of from -20°C to 110°C, preferably from -20°C to 50°C, more preferably from -10°C to 25°C, and/or
CO₂ is releasable from the separating agent (2) independently of its moisture content.

10. Method according to one of the preceding claims,
**characterised in that**
the indicator in the moist state of the separating agent (2) has a colour impression and the indicator in the dry state of the separating agent (2) is colourless,
and/or
the indicator is selected from one or more leuco dyes.

11. Method according to one of the preceding claims,
**characterised in that**
the separating agent (2) comprises a flow additive, preferably selected from a range of from more than 0% b.w. to 10% b.w., more preferably more than 0% b.w. to 7.5% b.w., even more preferably from more than 0% b.w. to 5.5% b.w., each relative to the total weight of the separating agent (2),
and/or
the separating agent (2) comprises a thickener, preferably selected from a range of from more than 0% b.w. to 2% b.w., more preferably more than 0% b.w. to 1.5% b.w., even more preferably from more than 0% b.w. to 1.2% b.w., each relative to the total weight of the separating agent (2),
and/or
the separating agent (2) comprises the polymer solution selected from a range of from 0.01% b.w. to 100% b.w., preferably 0.01% b.w. to 50% b.w., more preferably from 0.01% b.w. to 20% b.w., each relative to the total weight of the separating agent (2).

12. Method according to one of the preceding claims,
**characterised in that**
the solvent of the separating agent (2) comprises water and/or consists substantially thereof,
and/or
the separating agent (2) comprises solvent, preferably in the form of water, selected from a range of from more than 0% b.w. to 99.99% b.w., preferably 50% b.w. to 99.99% b.w., more preferably from 80% b.w. to 99.99% b.w., each relative to the total weight of the separating agent (2).

13. Method according to one of the preceding claims,
**characterised in that**
the separating agent (2) has a dynamic viscosity that is selected from a range of from 1mPas to 300Pas, preferably from 2mPas to 200mPas, more preferably from 3mPas to 150mPas, even more preferably from 3mPas to 100mPas, determined according to the methods for determining viscosity by means of rotational viscometers, described in DIN EN ISO 2884-1:2006-09, and/or
the separating agent (2) has no dispersal additive and/or emulsion additive, and/or the separating agent (2) has no polychlorinated biphenyls, and/or the separating agent (2) has no refined oils and/or fats, biogenic oils and/or fats.

14. Separating agent (2),
**characterised in that,**
the separating agent (2) has a polymer that has been at least partially dissolved in a solvent, wherein the polymer has a carboxylic acid-containing monomer component that comprises itaconic acid and/or itaconic acid derivatives,
wherein the itaconic acid derivative of the carboxylic acid-containing monomer component is derivatised at most on one carboxylic acid,
wherein derivatives of the itaconic acid of the carboxylic acid-containing monomer component are itaconic anhydride, itaconic acid methoxyester and/or itaconic acid ethoxyester,
wherein CO₂ is releasable from the separating agent (2) by decarboxylation,
and wherein the separating agent (2) has an indicator, whereby the separating agent (2) has a different colour impression in a dry state compared with in a moist state.

15. Use of a separating agent (2) in the production of mineral mouldings (4),
**characterised in that**
the separating agent (2) comprises a polymer that has been at least partially dissolved in a solvent, wherein the polymer has a carboxylic acid-containing monomer component that comprises itaconic acid and/or itaconic acid derivatives,
wherein the itaconic acid derivative of the carboxylic acid-containing monomer component is derivatised at most on one carboxylic acid,
wherein derivatives of the itaconic acid of the carboxylic acid-containing monomer component are itaconic anhydride, itaconic acid methoxyester and/or itaconic acid ethoxyester,
wherein the separating agent (2) is arranged on at least one surface of a shaping element (1) and is contacted with a flowable or plastically deformable mineral material mixture (3), wherein the mineral material mixture (3) comprises water and at least one mineral binding agent, and wherein CO₂ is releasable from the separating agent (2) by decarboxylation.

16. Use according to claim 15,
**characterised in that**
the decarboxylation of the separating agent (2) is initiated by contacting the separating agent (2) with a flowable or plastically deformable mineral material mixture (3), in particular in that the flowable or plastically deformable mineral material mixture (3) has at least one component that catalyses the decarboxylation,
and/or
the separating agent (2) catalyses the decarboxylation ionically, in particular basically.

17. Use according to one of claims 15 or 16,
**characterised in that**
the surface of a mineral moulding (4) contacted by the separating agent (2) is, after the at least partial solidification and/or hardening of the mineral moulding (4), configured in such a way that the area of holes and/or cavities is, relative to the total area, less than 5%, preferably less than 3%, particularly preferably less than 1.5%.

## Revendications

1. Procédé de fabrication d'un agent de démoulage (2),
**caractérisé en ce**
**que** le procédé comprend au moins les étapes suivantes :
a) la fourniture d'un mélange réactif comprenant un composant monomère contenant de l'acide carboxylique, qui comprend de l'acide itaconique et/ou des dérivés d'acide itaconique,
dans lequel le dérivé d'acide itaconique du composant monomère contenant de l'acide carboxylique est dérivé au maximum d'un acide carboxylique,
et dans lequel les dérivés de l'acide itaconique du composant monomère contenant de l'acide carboxylique sont l'anhydride de l'acide itaconique, le méthoxyester de l'acide itaconique et/ou l'éthoxyester de l'acide itaconique,
b) la polymérisation du mélange réactif en une solution polymère, dans lequel la solution polymère comprend un polymère au moins en partie dissous dans un solvant, qui présente le composant monomère contenant de l'acide carboxylique,
c) l'obtention d'un agent de démoulage (2) comprenant la solution polymère, dans lequel du CO₂ peut être libéré de l'agent de démoulage (2) par décarboxylation, dans lequel l'agent de démoulage (2) présente un indicateur, de sorte que l'agent de démoulage (2) présente une impression de couleur différente à l'état sec par rapport à un état humide.

2. Procédé selon la revendication précédente,
**caractérisé en ce**
**que** la solution polymère et/ou l'agent de démoulage (2), en particulier le polymère, comprennent des composants biogènes et/ou en sont constitués et/ou sont biodégradables et/ou compostables,
et/ou
**que** l'agent de démoulage (2) forme le CO₂ après un agencement sur au moins une surface d'un élément de moulage (1), de préférence sur au moins une surface d'un coffrage,
et de manière préférée après un contact avec un mélange de matériaux de construction minéral (3) fluide ou déformable plastiquement, qui comprend de l'eau et au moins un liant minéral,
et de manière davantage préférée pendant une solidification et/ou un durcissement au moins partiels du mélange de matériaux de construction minéral (3) fluide ou déformable plastiquement.

3. Procédé selon l'une quelconque des revendications précédentes,
**caractérisé en ce**
**que** le composant monomère contenant de l'acide carboxylique du mélange réactif présente, en plus de l'acide itaconique et/ou des dérivés d'acide itaconique, au moins un autre composant monomère contenant de l'acide carboxylique, qui est choisi individuellement ou en combinaison dans le groupe qui est constitué d'acide acrylique, d'acide méthacrylique, d'acide fumarique et d'acide maléique,
et/ou
**que** la proportion de monomère du composant monomère contenant de l'acide carboxylique, par rapport à la masse totale du mélange réactif, est choisie dans une plage de 2,5 % en poids à 65 % en poids, de manière préférée de 5 % en poids à 50 % en poids, de manière davantage préférée de 10 % en poids à 35 % en poids.

4. Procédé selon l'une quelconque des revendications précédentes,
**caractérisé en ce**
**que** le mélange réactif présente au moins un composant monomère ne contenant pas d'acide carboxylique, qui est choisi individuellement ou en combinaison dans le groupe qui est constitué d'acrylamide, d'esters de l'acide acrylique, d'esters de l'acide méthacrylique, d'esters de l'acide itaconique, d'esters de l'acide maléique, d'anhydride d'acide maléique, de terpènes, de manière préférée de myrcène, de styrène, d'isoprène, de butadiène, d'éther vinylique et/ou leurs combinaisons,
et/ou
**que** la proportion de monomère du composant monomère ne contenant pas d'acide carboxylique par rapport à la masse totale du mélange réactif est choisie dans une plage de 5 % en poids à 50 % en poids, de manière préférée de 10 % en poids à 35 % en poids, de manière davantage préférée de 15 % en poids à 30 % en poids,
et/ou
**que** le composant monomère contenant de l'acide carboxylique et/ou le composant monomère ne contenant pas d'acide carboxylique comprennent des composants biogènes et/ou en sont constitués, et/ou sont biodégradables et/ou compostables.

5. Procédé selon l'une quelconque des revendications précédentes,
**caractérisé en ce**
**que** le mélange réactif présente un solvant, de manière préférée un solvant organique, qui est choisi individuellement ou en tant que mélanges dans le groupe, qui est constitué d'éthanol, de 1-propanol, de 2-propanol, d'acétone, de 2-butane (MEK), d'acétate, en particulier d'acétate d'éthyle et d'acétate de lactyle,
et/ou
**que** le mélange réactif présente un solvant qui comprend de l'eau et/ou en est constitué,
et/ou
**que** la proportion du solvant, par rapport à la masse totale du mélange réactif, est choisie dans une plage de 15 % en poids à 95 % en poids, de manière préférée de 30 % en poids à 85 % en poids, de manière davantage préférée de 40 % en poids à 70 % en poids, de manière encore davantage préférée de 45 % en poids à 55 % en poids.

6. Procédé selon l'une quelconque des revendications précédentes,
**caractérisé en ce**
**que** le mélange réactif comprend un initiateur, de manière préférée un initiateur pour une polymérisation radicalaire,
et/ou
**que** la proportion d'initiateur, par rapport à la masse totale du mélange réactif, est choisie dans une plage de 0,05 % en poids à 1,5 % en poids, de manière préférée de 0,1 % en poids à 1 % en poids, de manière davantage préférée de 0,25 % en poids à 0,5 % en poids,
et/ou
**que** l'initiateur est choisi dans le groupe qui est constitué de composés azoïques, de peroxydes ou de mélanges de ceux-ci,
et/ou
**que** l'étape b) est réalisée à une température du mélange réactif choisie dans une plage de 20°C à 110°C, de manière préférée de 40°C et 85 C, de manière davantage préférée de 50°C à 70°C.

7. Procédé selon l'une quelconque des revendications précédentes,
**caractérisé en ce**
**que** le solvant de la solution polymère comprend de l'eau et/ou est en est sensiblement constitué,
et/ou
**que** le polymère est soluble dans l'eau, en particulier dans lequel au moins 30 g/l de polymère, de manière préférée au moins 60 g/l de polymère, est soluble dans l'eau à l'état d'équilibre dans un climat normal, dans lequel on entend par climat normal une température de 20 C et une pression atmosphérique de 1 bar.

8. Procédé selon l'une quelconque des revendications précédentes,
**caractérisé en ce**
**que** le polymère présente le composant monomère contenant de l'acide carboxylique, de manière préférée de l'acide itaconique et/ou des dérivés d'acide itaconique, de manière davantage préférée de l'acide itaconique, choisi dans une plage de 25 % en poids à 100 % en poids, de manière préférée de 40 % en poids à 100 % en poids, de manière davantage préférée de 55 % en poids à 100 % en poids,
et/ou
**que** le polymère présente le composant monomère non contenant de l'acide carboxylique, choisi dans une plage de plus de 0 % en poids à 75 % en poids, de préférence de plus de 0 % en poids à 60 % en poids, de manière davantage préférée de plus de 0 % en poids à 45 % en poids,
et/ou
**que** le polymère présente l'initiateur, choisi dans une plage de 0,05 % en poids à 2 % en poids, de manière préférée de 0,1 % en poids à 1,5 % en poids, de manière davantage préférée de 0,5 % en poids à 1,1 % en poids.

9. Procédé selon l'une quelconque des revendications précédentes,
**caractérisé en ce**
**que** le polymère présente une valeur pour une température de transition vitreuse qui est choisie dans une plage de -20 C à 110 C, de manière préférée de -20 C à 50 C, de manière davantage préférée de -10 C à 25 C, et/ou
**que** du CO₂ peut être libéré de l'agent de démoulage (2) indépendamment de sa teneur en humidité.

10. Procédé selon l'une quelconque des revendications précédentes,
**caractérisé en ce**
**que** l'indicateur présente une impression de couleur à l'état humide de l'agent de démoulage (2) et que l'indicateur est incolore à l'état sec de l'agent de démoulage (2),
et/ou
**que** l'indicateur est choisi parmi un ou plusieurs leucocolorants.

11. Procédé selon l'une quelconque des revendications précédentes,
**caractérisé en ce**
**que** l'agent de démoulage (2) comprend un additif nivelant, de manière préférée choisi dans une plage de plus de 0 % en poids à 10 % en poids, de manière davantage préférée de plus de 0 % en poids à 7,5 % en poids, de manière encore davantage préférée de plus de 0 % en poids à 5,5 % en poids, respectivement par rapport au poids total de l'agent de démoulage (2),
et/ou
**que** l'agent de démoulage (2) comprend un épaississant, de manière préférée choisi dans une plage de plus de 0 % en poids à 2 % en poids, de manière davantage préférée de plus de 0 % en poids à 1,5 % en poids, de manière encore davantage préférée de plus de 0 % en poids à 1,2 % en poids, respectivement par rapport au poids total de l'agent de démoulage (2),
et/ou
**que** l'agent de démoulage (2) comprend la solution polymère choisie dans une plage de 0,01 % en poids à 100 % en poids, de manière préférée de 0,01 % en poids à 50 % en poids, de manière davantage préférée de 0,01 % en poids à 20 % en poids, respectivement par rapport au poids total de l'agent de démoulage (2).

12. Procédé selon l'une quelconque des revendications précédentes,
**caractérisé en ce**
**que** le solvant de l'agent de démoulage (2) comprend de l'eau et/ou en est sensiblement constitué,
et/ou
**que** l'agent de démoulage (2) comprend du solvant, de manière préférée sous forme d'eau, choisi dans une plage de plus de 0 % en poids à 99,99 % en poids, de manière préférée de 50 % en poids à 99,99 % en poids, de manière davantage préférée de 80 % en poids à 99,99 % en poids, respectivement par rapport au poids total de l'agent de démoulage (2).

13. Procédé selon l'une quelconque des revendications précédentes,
**caractérisé en ce**
**que** l'agent de démoulage (2) présente une viscosité dynamique qui est choisie dans une plage de 1 mPas à 300 Pas, de manière préférée de 2 mPas à 200 mPas, de manière davantage préférée de 3 mPas à 150 mPas, de manière encore davantage préférée de 3 mPas à 100 mPas, déterminée selon le procédé de détermination de la viscosité au moyen d'un viscosimètre rotatif décrit dans la norme DIN EN ISO 2884-1:2006-09,
et/ou
**que** l'agent de démoulage (2) ne présente pas d'additif de dispersion et/ou d'additif d'émulsion et/ou que l'agent de démoulage (2) ne présente pas de biphényles polychlorés et/ou que l'agent de démoulage (2) ne présente pas d'huiles et/ou de graisses raffinées, d'huiles et/ou de graisses biogènes.

14. Agent de démoulage (2),
**caractérisé en ce**
**que** l'agent de démoulage (2) présente un polymère au moins en partie dissous dans un solvant, dans laquelle le polymère présente un composant monomère contenant de l'acide carboxylique, qui comprend de l'acide itaconique et/ou des dérivés d'acide itaconique,
dans lequel le dérivé d'acide itaconique du composant monomère contenant de l'acide carboxylique est dérivé au maximum d'un acide carboxylique,
dans lequel des dérivés de l'acide itaconique du composant monomère contenant de l'acide carboxylique sont l'anhydride de l'acide itaconique, le méthoxyester de l'acide itaconique et/ou l'éthoxyester de l'acide itaconique,
dans lequel du CO₂ peut être libéré de l'agent de démoulage (2) par décarboxylation,
et dans lequel l'agent de démoulage (2) présente un indicateur, de sorte que l'agent de démoulage (2) présente une impression de couleur différente à l'état sec par rapport à un état humide.

15. Utilisation d'un agent de démoulage (2) lors de la fabrication de corps moulés minéraux (4)
**caractérisé en ce**
**que** l'agent de démoulage (2) présente un polymère au moins en partie dissous dans un solvant, dans laquelle le polymère présente un composant monomère contenant de l'acide carboxylique, qui comprend de l'acide itaconique et/ou des dérivés d'acide itaconique,
dans lequel le dérivé d'acide itaconique du composant monomère contenant de l'acide carboxylique est dérivé au maximum d'un acide carboxylique,
dans lequel des dérivés de l'acide itaconique du composant monomère contenant de l'acide carboxylique sont l'anhydride de l'acide itaconique, le méthoxyester de l'acide itaconique et/ou l'éthoxyester de l'acide itaconique,
dans laquelle l'agent de démoulage (2) est disposé sur au moins une surface d'un élément de moulage (1) et est mis en contact avec un mélange de matériaux de construction minéral (3) fluide ou déformable plastiquement, dans laquelle le mélange de matériaux de construction minéral (3) comprend de l'eau et au moins un liant minéral, et dans laquelle du CO₂ peut être libéré de l'agent de démoulage (2) par décarboxylation.

16. Utilisation selon la revendication 15,
**caractérisé en ce**
**que** la décarboxylation de l'agent de démoulage (2) est initiée par la mise en contact de l'agent de démoulage (2) avec un mélange de matériaux de construction minéral (3) fluide ou déformable plastiquement, en particulier que le mélange de matériaux de construction minéral (3) fluide ou déformable plastiquement présente au moins un composant qui catalyse la décarboxylation,
et/ou
**que** l'agent de démoulage (2') catalyse la décarboxylation de manière ionique, en particulier de manière alcaline.

17. Procédé selon l'une quelconque des revendications 15 ou 16,
**caractérisé en ce**
**que** la surface en contact avec l'agent de démoulage (2) d'un corps moulé minéral (4) est configurée après la solidification et/ou le durcissement au moins partiels du corps moulé minéral (4) de telle manière que la surface de trous et/ou de vides, par rapport à la surface totale, est inférieure à 5 %, de manière préférée inférieure à 3 %, de manière particulièrement préférée inférieure à 1,5 %.
